(19) Europäisches Patentamt European Patent Office Office européen des brevets

(11) **EP 3 446 452 B1**

(12) **EUROPEAN PATENT SPECIFICATION**

(45) Date of publication and mention of the grant of the patent:
**01.07.2020 Bulletin 2020/27**

(21) Application number: **16724609.9**

(22) Date of filing: **13.05.2016**

(51) Int Cl.:
*H04L 27/00* (2006.01)     *H04L 27/26* (2006.01)
*H04L 5/14* (2006.01)     *H04L 25/03* (2006.01)

(86) International application number:
**PCT/EP2016/060890**

(87) International publication number:
**WO 2017/194167 (16.11.2017 Gazette 2017/46)**

(54) **RADIO TRANSCEIVING DEVICE AND METHOD USING WAVEFORM ADAPTATION**

FUNKSENDEEMPFANGSVORRICHTUNG UND VERFAHREN UNTER VERWENDUNG VON WELLENFORMANPASSUNG

DISPOSITIF ET PROCÉDÉ D'ÉMISSION-RÉCEPTION RADIO À L'AIDE D'UNE ADAPTATION DE FORMES D'ONDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2019 Bulletin 2019/09**

(73) Proprietor: **Huawei Technologies Co., Ltd.**
**Longgang District**
**Shenzhen, Guangdong 518129 (CN)**

(72) Inventors:
• **ZHAO, Zhao**
  **80992 Munich (DE)**
• **WANG, Qi**
  **80992 Munich (DE)**
• **SCHELLMANN, Malte**
  **80992 Munich (DE)**
• **XU, Wen**
  **80992 Munich (DE)**
• **GONG, Xitao**
  **80992 Munich (DE)**

(74) Representative: **Gill Jennings & Every LLP**
**The Broadgate Tower**
**20 Primrose Street**
**London EC2A 2ES (GB)**

(56) References cited:
**EP-A2- 1 737 134**

• **ZTE: "Discussion on New Waveform for new radio interface", 3GPP DRAFT; R1-162225 DISSCUSS ON NEW WAVEFORM FOR 5G, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 1 April 2016 (2016-04-01), XP051079525, Retrieved from the Internet: URL:http://www.3gpp.org/ftp/tsg_ran/WG1_RL 1/TSGR1_84b/Docs/ [retrieved on 2016-04-01]**
• **HUAWEI ET AL: "OFDM based flexible waveform for 5G", 3GPP DRAFT; R1-162152, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051079998, Retrieved from the Internet: URL:http://www.3gpp.org/ftp/tsg_ran/WG1_RL 1/TSGR1_84b/Docs/ [retrieved on 2016-04-02]**
• **NORTEL: "LTE DL Numerology to Meet the Spectral Emission Mask", 3GPP DRAFT; R4-060926, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Tallinn; 20060821, 21 August 2006 (2006-08-21), XP050176027, [retrieved on 2006-08-21]**

**Description**

TECHNICAL FIELD

The present disclosure relates to a radio transceiving device with a unit for adapting a transmit/receive waveform, in particular a pulse or a window or a filter, based on a set of distinct transmit and receive waveforms. The disclosure further relates to a method for performing such waveform adaptation and to a communication system, in particular a time-division duplexing (TDD) system, with variable waveform shaping.

BACKGROUND

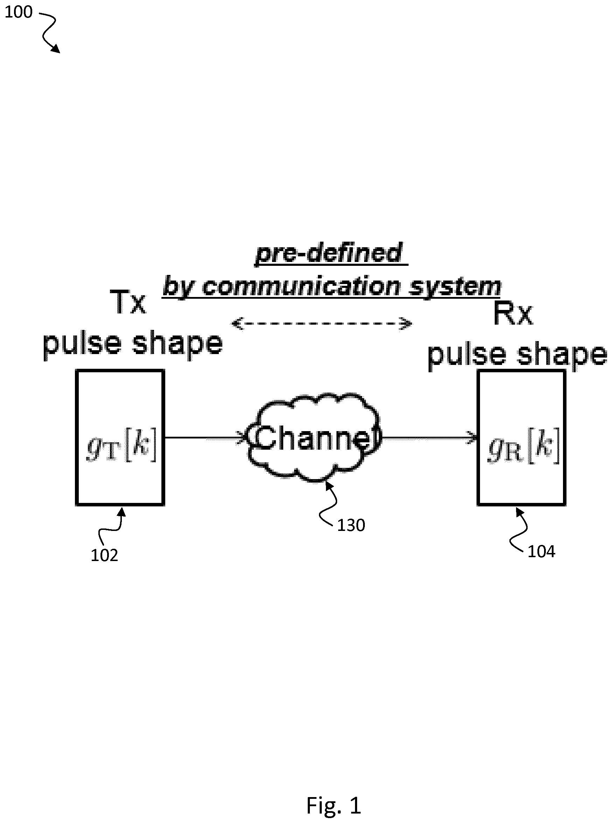

In current communication systems 100 there is no adaptation in terms of the pulse shape, as illustrated in Figure 1. The pulse shape and settings are pre-defined in communication systems, and applied to various scenarios/transmissions. For example, UMTS WCDMA modulation uses Quadrature Phase Shift Keying (QPSK) with root-raised cosine pulse shaping filters with roll-off factor equal to 0.22. In LTE (Long Term Evolution), CP-OFDM (cyclic prefix orthogonal frequency division multiple access) with normal or extended CP (cyclic prefix) length is applied. In other words, the transmit (TX) pulse $g_T(t)$ 102 is fixed as a rectangular pulse with length $T$, where T is the symbol period. The receive (RX) pulse shape $g_R(t)$ 104 is also a rectangular shape with length $T = T - T_{cp}$. Although there are two different CP length tailored for different propagation scenarios, the pulse shape at the transmitter is considered fixed in LTE and the receive pulse is quasi-persistent. This fixed pulse shaping limits the system capability in more extreme scenarios and appears to be vulnerable against severe frequency dispersion. The rectangular pulse in CP-OFDM systems has high OOB (out-of-band) power leakage, which also hinders flexible air interface configurations, such as the coexistence of various numerologies.

In the next generation radio air interface design, e.g. for 5G communication systems, there is a need to support diverse different service types with adverse requirements. The scenarios of interest may range from broadband to narrowband, from high data rate streaming to burst transmission of small data packets, from densely populated urban area to high mobility vehicles. This means the new air interface does not only need to be flexible in order to meet the various requirements, but also needs to allow coexistence of multiple services with adverse requirements.

EP 1737134 A2 discloses adaptive pulse shaping filter based on interference detection. ZTE: "Discussion on New Waveform for new radio interface", 3GPP DRAFT; R1-162225 DISSCUSS ON NEW WAVEFORM FOR 5G, 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, vol. RAN WG1, no. Busan, Korea; 20160411-20160415 1 April 2016 (2016-04-01), XP051079525 discloses discussion on new waveform for new radio interface.

HUAWEI ET AL: "OFDM based flexible waveform for 5G", 3GPP DRAFT; R1-162152 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, vol. RAN WG1, no. Busan, Korea; 20160411-20160415 2 April 2016 (2016-04-01), XP051079998 discloses OFDM based flexible waveform for 5G.

NORTEL: "LTE DL Numerology to Meet the Spectral Emission Mask", 3GPP DRAFT; R4-060926 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, vol. RAN WG4, no. Tallinn, 20060821, 21 August 2006 (2006-08-21), XP050176027 discloses LTE DL Numerology to Meet the Spectral Emission Mask.

SUMMARY

It is the object of the invention to provide a concept for an improved radio air interface supporting diverse service types with adverse requirements in an efficient manner, in particular for the broad range of scenarios as described above.

The invention is solely defined by the appended claims. In the following, references to embodiments not falling within the scope of the claims are to be understood as examples useful for understanding the invention.

A basic idea of the invention is to design a communication system, in particular a TDD system, by exploiting dynamic waveform adaptation based on distinct transmit and receive waveforms. The disclosure elaborates how TDD systems can benefit from OFDM with adapted pulse shaping or windowing or filtering. While the idea is addressed with the example of "OFDM with pulse shaping", the idea is directly applicable also to windowed-OFDM and filtered OFDM. In this disclosure, it is shown how a communication system, in particular a TDD system, can be designed taking the aforementioned scenarios of interest into account.

In the following, a TDD system is described which enables pulse shape adaptation. In such a system, the pulse shapes may be designed according to the system/service requirements and/or propagation channel characteristics. Such a system allows its pulse shaping used in the DL (downlink) and the UL (uplink) to be adapted according to their distinct traffic characteristics. Also, pulse adaptation procedure may be carried out by the BS (base station) and the UE (user equipment) either autonomously or jointly based on the channel reciprocity of TDD systems. Pulse shape adaptation increases the flexibility and improves the reliability of the system, enabling the provision ofa wide range of service types.

In the following sections, two aspects of pulse adaptation are elaborated: Optimization of pulse shapes using certain criteria; and application of variable pulse shapes.

In order to describe the invention in detail, the following terms, abbreviations and notations will be used:

| | |
|---|---|
| TDD: | time-division duplexing |
| FDD: | frequency-division duplexing |
| UL: | uplink |
| DL: | downlink |
| RX: | receive |
| TX: | transmit |
| UE: | user equipment, mobile terminal |
| BS: | base station, serving radio cell |
| CP: | cyclic prefix |
| OFDM: | orthogonal frequency division multiplex |
| P-OFDM: | pulse-shaped OFDM |
| W-OFDM: | windowed OFDM |
| CP-OFDM: | cyclic-prefix OFDM |
| MIMO: | multiple input multiple output |
| SIMO: | single input multiple output |
| GP: | guard period |
| OOB: | out-of-band |
| WCDMA: | wideband code division multiple access |
| QPSK: | quadrature phase shift keying |
| LTE: | long term evolution |
| UMTS: | universal mobile telecommunication system |
| ICI: | inter-channel interference |
| ACK: | acknowledge |
| NACK: | non-acknowledge |
| EVA: | extended vehicular channel model |
| BLER: | block error rate |
| SINR: | signal to interference plus noise ratio |
| MCS: | modulation and coding scheme |
| FFT: | Fast Fourier Transform |
| IFFT: | Inverse Fast Fourier Transform |

According to a first aspect, the invention relates to a radio transceiving device, comprising: a modulation unit, configured to modulate transmit data onto a time-frequency resource based on a transmit waveform, in particular a transmit pulse, a transmit window or a transmit filter; a demodulation unit, configured to demodulate receive data from the time-frequency resource based on a receive waveform, in particular a receive pulse, a receive window or a receive filter, wherein the transmit data and the receive data are arranged on the time-frequency resource, in particular in a time-division duplexing (TDD) manner; and a waveform adaptation unit configured to adapt at least one of the transmit waveform and the receive waveform based on a set of distinct transmit and receive waveforms.

Such a radio transceiving device improves performance of radio transmission over the air interface while supporting diverse service types with adverse requirements. In such a device, the waveforms may be adapted according to the system/service requirements and/or propagation channel characteristics. Such a device allows its waveforms used in the DL (downlink) and the UL (uplink) to be adapted according to the different traffic characteristics. Waveform adaption, such as pulse shaping, filtering or windowing may be carried out by the BS (base station) and the UE (user equipment) either autonomously or jointly. The radio transceiving device may be flexibly applied to TDD systems and FDD systems. For TDD systems the channel reciprocity of TDD systems may be exploited. Waveform adaptation improves flexibility and reliability of the system in order to provide a wide range of service types.

In a first possible implementation form of the radio transceiving device according to the first aspect, the waveform adaptation unit is configured to adapt at least one of the transmit waveform and the receive waveform based on at least one of the following criteria: a frame structure used to arrange the transmit data and the receive data on the time-frequency resource, an on-off transient mask of the radio transceiving device, a robustness of the radio transceiving device against noise, inter-channel-interference and/or co-channel interference, a duration of the transmit waveform and/or the receive waveform, a spectrum emission mask of the time-frequency resource.

Such a radio transceiving device can be flexibly designed according to multiple requirements. The radio transceiving device can be designed to provide optimum performance in each such scenario.

In a second possible implementation form of the radio transceiving device according to the first aspect as such or according to the first implementation form of the first aspect, the set of transmit and receive waveforms comprises distinct transmit waveforms and receive waveforms for uplink and downlink direction and for transmitter and receiver section of the radio transceiving device.

This provides the advantage that these distinct transmit waveforms and receive waveforms for uplink and downlink direction and for transmitter and receiver section of the radio transceiving device can be computed in advance and stored in a lookup table in order to reduce the computational complexity of the radio transceiving device.

In a third possible implementation form of the radio transceiving device according to the first implementation form of the first aspect, the waveform adaptation unit is configured to adapt different transmit or receive waveforms according to a duration of a frame of the frame structure and/or a position of the transmit data and/or the receive data in the frame, in particular, at a beginning, a middle or an end of the frame.

This provides the advantage that a lot of transmission scenarios are considered and the radio transceiving device may provide optimal performance in terms of data throughput for each such transmission scenario.

In a fourth possible implementation form of the radio transceiving device according to the second or the third implementation form of the first aspect, the waveform adaptation unit is configured to adapt the transmit waveform according to a predefined transmit waveform design and to adapt the receive waveform based on channel knowledge, in particular based on channel knowledge obtained from uplink data for a radio transceiving device of a base station or based on channel knowledge obtained from downlink data for a radio transceiving device of a mobile station.

This provides the advantage that no signaling messages are required to inform the base station transceiving device of the waveform used by the UE transceiving device and vice versa. Instead, available feedback messages informing about channel knowledge can be applied.

In a fifth possible implementation form of the radio transceiving device according to the first aspect as such or according to any of the preceding implementation forms of the first aspect, the set the transmit data and the receive data are arranged on the time-frequency resource in a frequency-division duplexing manner.

This provides the advantage that the radio transceiving device can be flexibly applied in both, TDD and FDD scenarios.

In a sixth possible implementation form of the radio transceiving device according to the first aspect as such or according to any of the preceding implementation forms of the first aspect, the waveform adaptation unit is configured to adapt the transmit waveform and the receive waveform according to a downlink-uplink channel reciprocity.

In communication systems with downlink-uplink channel reciprocity, the base station can obtain the downlink channel state information (CSI) based on the uplink channel estimation, and thus perform advanced multi-antenna technologies to enhance the downlink transmission.

In a seventh possible implementation form of the radio transceiving device according to the sixth implementation form of the first aspect, the waveform adaptation unit is configured to adapt the transmit waveform and the receive waveform such that the overall downlink and uplink channels in terms of channel impulse response and/or channel frequency response remain the same.

Such a radio transceiving device can estimate the uplink channel characteristics from the downlink channel characteristics and vice versa with high reliability, thereby improving efficiency at reduced computational complexity.

In an eighth possible implementation form of the radio transceiving device, in particular for a base station, according to the sixth or the seventh implementation form of the first aspect, the waveform adaptation unit is configured to adapt the transmit waveform for the downlink channel based on channel knowledge obtained from the uplink channel.

Such a radio transceiving device provides the advantage that no additional signaling messages are required for the BS. The transmit waveform for the downlink channel can be derived from the channel knowledge obtained from the uplink channel from the UE.

In a ninth possible implementation form of the radio transceiving device, in particular for a mobile station, according to the sixth or the seventh implementation form of the first aspect, the waveform adaptation unit is configured to adapt the transmit waveform for the uplink channel based on channel knowledge obtained from the downlink channel.

Such a radio transceiving device provides the advantage that no additional signaling messages are required for the UE. The transmit waveform for the uplink channel can be derived from the channel knowledge obtained from the downlink channel from the base station.

In a tenth possible implementation form of the radio transceiving device according to the first aspect as such or according to any of the sixth to the ninth implementation forms of the first aspect, the waveform adaptation unit is configured to adapt the transmit waveform either autonomously or based on an indication, in particular for the uplink channel of a radio transceiving device of a mobile station based on an indication from a base station or for the downlink channel of a radio transceiving device of the base station based on an indication from the mobile station.

This provides the advantage that flexible adaptation scenarios may be applied, either autonomously or indication triggered. When the BS provides an indication to the UE, the UE can precisely match its receive waveform to the transmit waveform of the BS. When the UE provides an indication to the BS, the BS can precisely match its receive waveform to the transmit waveform of the UE.

In an eleventh possible implementation form of the radio transceiving device according to the first aspect as such or according to any of the sixth to the tenth implementation forms of the first aspect, the waveform adaptation unit is configured to adapt the transmit waveform and the receive waveform based on a selection from a pool of predefined pairs of transmit and receive waveforms.

This provides the advantage that no online computation of optimal waveforms is required. When the waveform adaptation unit adapts the transmit waveform and the receive waveform based on a selection from a pool of predefined pairs of transmit and receive waveforms, computational complexity at run-time can be reduced.

In a twelfth possible implementation form of the radio transceiving device according to the first aspect as such or according to any of the preceding implementation forms of the first aspect, the waveform adaptation unit is configured to adapt the transmit waveform different from the receive waveform.

This provides the advantage that different adaption of transmit waveform and receive waveform can better match the transmission to different DL and UL channel characteristics and thereby improve the data throughput.

According to a second aspect, the invention relates to a communication system, in particular a time division duplexing system, comprising: a radio cell, in particular a base station, comprising a first radio transceiving device according to the first aspect as such or according to any of the implementation forms of the first aspect for transmitting downlink data and receiving uplink data; and a mobile station comprising a second radio transceiving device according to the first aspect as such or according to any of the implementation forms of the first aspect for transmitting uplink data and receiving downlink data.

Such a communication system improves performance of radio transmission over the air interface while supporting diverse service types with adverse requirements. In such a system, the waveforms may be adapted according to the system/service requirements and/or propagation channel characteristics.

According to a third aspect, the invention relates to a radio transceiving method, comprising: modulating transmit data onto a time-frequency resource based on a transmit waveform, in particular a transmit pulse, a transmit window or a transmit filter; demodulating receive data from the time-frequency resource based on a receive waveform, in particular a receive pulse, a receive window or a receive filter, wherein the transmit data and the receive data are arranged on the time-frequency resource, in particular in a time-division duplexing (TDD) manner; and adapting at least one of the transmit waveform and the receive waveform based on a set of distinct transmit and receive waveforms.

Such a radio transceiving method improves performance of radio transmission over the air interface while supporting diverse service types with adverse requirements. Such a method allows waveform adaptation according to the system/service requirements and/or propagation channel characteristics. Such a method allows its waveforms used in the DL (downlink) and the UL (uplink) to be adapted according to the different traffic characteristics. The radio transceiving method may be flexibly applied to TDD systems and FDD systems. For TDD systems the channel reciprocity of TDD systems may be exploited. Waveform adaptation improves flexibility and reliability in order to provide a wide range of service types.

According to a fourth aspect, the invention relates to a computer program being configured to implement the method according to the third aspect when executed on a computer.

This provides the advantage that such a computer program can be easily implemented on a lot of different radio transceiving devices.

BRIEF DESCRIPTION OF THE DRAWINGS

Further embodiments of the invention will be described with respect to the following figures, in which:

Fig. 1 shows a schematic diagram illustrating a conventional communication system 100 with fixed pulse shaping;

Fig. 2 shows a schematic diagram illustrating a communication system 200 according to the disclosure including a first radio transceiving device 210 of a base station (BS) and a second radio transceiving device 220 of a mobile station or mobile equipment (UE) which are communicating in uplink (UL) and downlink (DL) direction over a communication channel 230;

Fig. 3 shows a time diagram illustrating an exemplary TDD transmission with symmetric traffic load 300 switching between uplink (UL) and downlink (DL) transmission;

Fig. 4 shows a time diagram illustrating an exemplary TDD transmission with asymmetric traffic load 400 switching between uplink (UL) and downlink (DL) transmission;

Fig. 5 shows a schematic diagram illustrating an exemplary self-contained DL/UL frame structure 500;

Fig. 6 shows a power-time diagram illustrating an exemplary on-off time mask 600 of UEs;

Fig. 7 shows a time diagram 700 illustrating an exemplary one symbol short transmission for the uplink control in a self-contained subframe according to the disclosure;

Fig. 8 shows a schematic diagram illustrating an exemplary symmetric pulse design in the DL/UL transmission of a TDD system according to the disclosure;

Fig. 9 shows a schematic diagram illustrating an exemplary waveform design 900 of a transmit waveform 902 and a receive waveform 901 in a high noise at receiver scenario where the receive waveform 901 is adapted by the receiver according to the disclosure;

Fig. 10 shows a schematic diagram illustrating an exemplary waveform design 1000 of a transmit waveform 1002 and a receive waveform 1001 in a high noise at receiver scenario where the receiver waveform 1001 is adapted by the receiver and the transmit waveform 1002 is adapted by the transmitter according to the disclosure;

Fig. 11 shows a schematic diagram illustrating an exemplary waveform design 1100 of a transmit waveform 1102 and a receive waveform 1101 in a low noise at receiver scenario where the receive waveform 1101 is adapted by the receiver according to the disclosure;

Fig. 12 shows a schematic diagram illustrating an exemplary waveform design 1200 of a transmit waveform 1202 and a receive waveform 1201 in a low noise at receiver scenario where the receiver waveform 1201 is adapted by the receiver and the transmit waveform 1202 is adapted by the transmitter according to the disclosure;

Fig. 13 shows a block diagram illustrating an exemplary OFDM-based orthogonal waveform transceiver 1300 according to the disclosure;

Fig. 14 shows a schematic diagram illustrating an exemplary radio transceiving method 1400 according to the disclosure;

Fig. 15 shows a schematic diagram illustrating an exemplary pulse shape design 1500 for a CP-OFDM and a P-OFDM communication system according to the disclosure;

Fig. 16 shows a schematic diagram illustrating an exemplary power density 1600 of the designed pulse for pulse-shaped OFDM and CP-OFDM depicted in Fig. 15;

Fig. 17 shows a performance diagram 1700 illustrating a block error rate (BLER) versus SNR for OFDM with pulse shaping and CP-OFDM for a 1x2 SIMO communication system with perfect timing;

Fig. 18 shows a performance diagram 1800 illustrating a block error rate (BLER) versus SNR for OFDM with pulse shaping and CP-OFDM for a 1x2 SIMO communication system with timing misalignment; and

Fig. 19 shows a performance diagram 1900 illustrating receive SINR versus normalized carrier frequency offset for OFDM with pulse shaping and CP-OFDM for a SISO communication system.

## DETAILED DESCRIPTION OF THE EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described device, circuit or system may also hold true for a corresponding method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as LTE, in particular LTE-A and/or OFDM. The methods and devices described below may further be implemented in a base station (NodeB, eNodeB) or a mobile device (or mobile station or User Equipment (UE)). The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender) with a radio frequency lying in a range of about 3 Hz to 300 GHz. The frequency range may correspond to frequencies of alternating current electrical signals used to produce and detect radio waves.

The devices and methods described hereinafter may be applied in MIMO systems. Multiple-input multiple-output (MIMO) wireless communication systems employ multiple antennas at the transmitter and at the receiver to increase system capacity and to achieve better quality of service. In spatial multiplexing mode, MIMO systems may reach higher peak data rates without increasing the bandwidth of the system by transmitting multiple data streams in parallel in the same frequency band.

The devices and methods described herein after may be designed in accordance to mobile communication standards such as e.g. the Long Term Evolution (LTE) standard or the advanced version LTE-A thereof. LTE (Long Term Evolution), marketed as 4G, 5G LTE and beyond, is a standard for wireless communication of high-speed data for mobile phones and data terminals. The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The devices and methods described hereinafter may be applied in LTE TDD mode and LTE FDD mode systems, e.g. LTE FDD mode systems having a type 1 LTE frame structure or LTE TDD mode systems having a type 2 LTE frame structure. The type 1 LTE frame includes 10 sub-frames each having two slots. A basic type 1 LTE frame has an overall length of 10 milliseconds. The type 2 LTE frame has an overall length of 10 milliseconds. The 10 ms frame comprises two half frames, each 5 ms long. The LTE half-frames are further split into five subframes, each 1 millisecond long. The subframe configuration is based on a switched Uplink-Downlink configuration.

TDD has gained enormous interests for the next generation communication systems since a new range of available spectrums are mostly TDD bands. The advantages of TDD can be listed as the following: TDD allows asymmetric UL/DL traffic allocation and enables dynamic and flexible usage of the time-frequency resource. Thanks to the channel reciprocity, MIMO transmission using advanced precoding and beamforming techniques can be more efficiently applied in TDD systems.

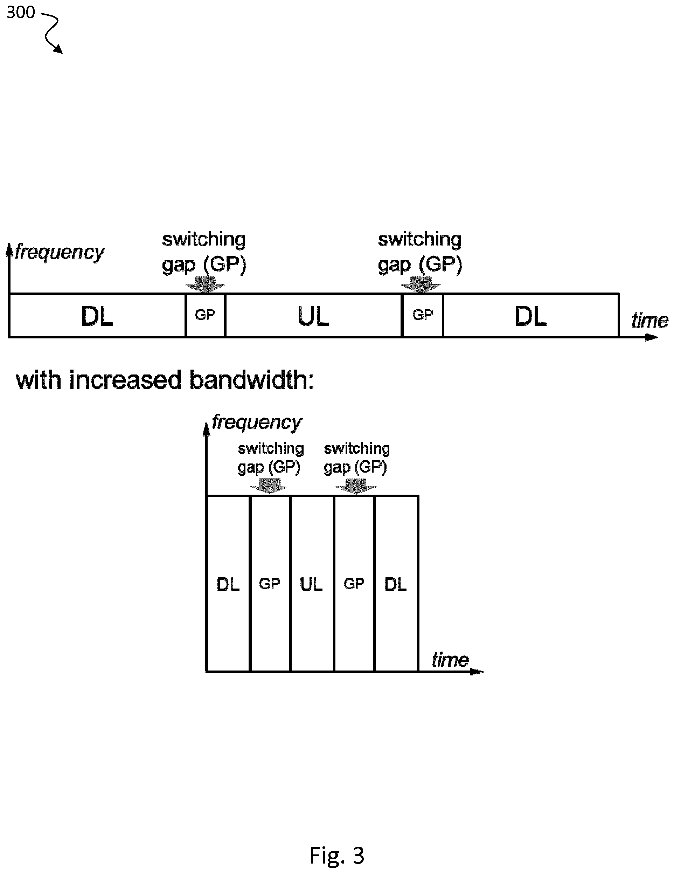

The next generation radio access technology aims to provide more flexible air interface with much lower latency. In case of an increased system bandwidth, duration of a single transmission can be reduced to the order of microseconds, while the frequency of DL/UL switching will dramatically increase as can be seen from Figure 3 which shows a time diagram illustrating an exemplary TDD transmission with symmetric traffic load 300 switching between uplink (UL) and downlink (DL) transmission. A guard period (GP) is used to separate UL and DL transmission periods.

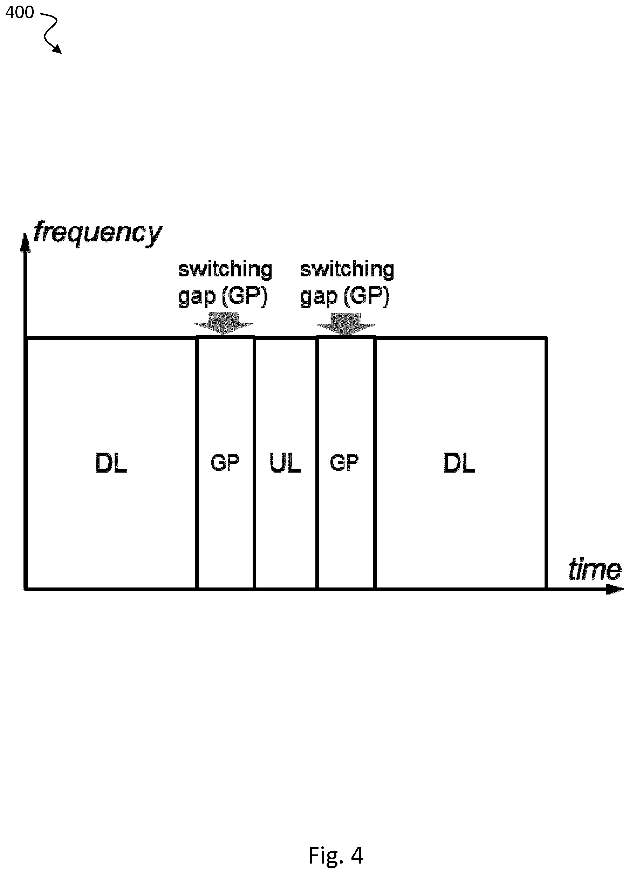

The increased DL/UL switching frequency reduced round trip time of a single transmission. Also, diverse transmission durations can be anticipated in TDD systems thereby allowing the system to carry out DL/UL transmission according to its traffic load. As shown in Figure 4, in a downlink traffic dominated scenario, UL transmission merely consists of feedback and signaling information may have a very short duration. For the extreme case, only one symbol is transmitted in the UL.

The devices and methods described hereinafter may implement different techniques of waveforming and waveform design. Waveform design, especially the variations based on orthogonal frequency division multiplexing (OFDM), is one of the key technical components to address the challenges encountered in 5G systems. The conventional cyclic prefix (CP)-OFDM transmits using a rectangular pulse shape $g_{cp\text{-}ofdm}(t)$ with length $T$ and receives using a rectangular receive pulse shape for CP-OFDM $\gamma_{cp\text{-}ofdm}(t)$ of a shorter duration $T - T_{cp}$. Specifically, a CP of length $T_{cp}$ is appended at the beginning of each OFDM symbol to combat channel multipath delay. The pair of pulse shapes used in CP-OFDM can be considered optimal in time-invariant channel with power delay profile shorter than $T_{cp}$, and with infinite target SINR if the SNR mismatching loss is ignored. However, the performance of CP-OFDM systems degrade in time-variant / frequency-dispersive channels or severe time-dispersive channels in which the length of channel delay is longer than $T_{cp}$. In addition, the mismatched rectangular pulse shapes at CP-OFDM transceiver have abrupt transitions of signal power in the time domain, leading to very slow decaying in the frequency domain. Such properties in CP-OFDM have certain drawbacks, such as spectral and energy efficiency loss, vulnerability to frequency-dispersion and relatively high out-of-band (OOB) emission. These drawbacks will severely deteriorate the coexistence of flexible air interface/numerology, and not suitable to support frequent TDD DL/UL switching and asymmetric DL/UL transmissions.

Alternatively, OFDM systems with non-rectangular pulse shaping/windowing (P-OFDM/W-OFDM) offer better time-frequency localization and more flexibility to balance the robustness to both time and frequency dispersion. Let $n$ denote the pulse shaped OFDM symbol indices, $m$ the subcarrier indices, the baseband transmit signal of general pulse shaped OFDM is thus given by:

$$s(t) = \sum_{n=-\infty}^{+\infty} \sum_{m=0}^{M-1} a_{m,n} g_{m,n}(t),$$

where $a_{m,n}$ denotes the complex-valued data symbol, $g_{m,n}(t)$ the modulation of the transmit pulse $g(t)$ with:

$$g_{m,n}(t) = g(t - nT)e^{j2\pi mF(t-nT)} .$$

The symbol period and the subcarrier spacing are denoted by $T$ and $F$, respectively. At the receiver side, the demodulated symbol $\tilde{a}_{m,n}$ is reconstructed by computing the inner product of the received signal $r(t)$ and $\gamma_{m,n}(t)$ as:

$$\tilde{a}_{m,n} = \langle r, \gamma_{m,n} \rangle$$

where $\gamma_{m,n}(t)$ is the time-frequency shifted version of the receive pulse shape $\gamma(t)$ as:

$$\gamma_{m,n}(t) = \gamma(t - nT)e^{j2\pi mF(t-nT)}.$$

As seen from the system model, this multicarrier system can be characterized using the quadruple ($T,F,g(t),\gamma(t)$). Since the design parameters contain not only the symbol period $T$ and subcarrier spacing $F$, but also pulse shapes $g(t)$, $\gamma(t)$ as additional degree of freedoms, this multicarrier system is termed as pulse shaped (P)-OFDM. It is important to note that W-OFDM is closely connected to the well-studied topic of pulse shaping theory for OFDM system, since the common windowing operation in practice is merely one type of short non-rectangular pulse shapes in the general P-OFDM.

Generally speaking, OFDM with pulse shaping or W-OFDM exploit pulse shaping or windowing as one additional degree of freedom aiming at balancing the robustness against both time and frequency dispersions. By carefully design the pulse shaping/windowing, reduced OOB power leakage and better time and frequency localization can be achieved. Pulse-shaping with relaxed time localization but better frequency localization is favourable to combat ICI. Since there is trade-off between time and frequency robustness, pulse shape/windowing selection and configuration need to be adjusted for supporting adverse requirements in 5G communication systems.

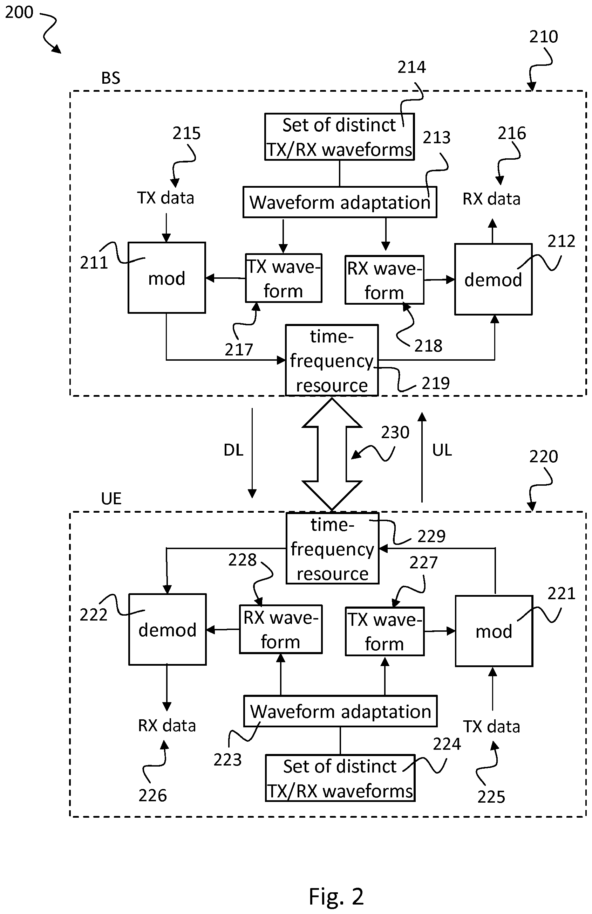

Fig. 2 shows a schematic diagram illustrating a communication system 200 according to the disclosure including a first radio transceiving device 210 of a base station (BS) and a second radio transceiving device 220 of a mobile station or mobile equipment (UE) which are communicating in uplink (UL) and downlink (DL) direction over a communication channel 230.

The communication system 200 includes a radio cell, in particular a base station (BS) and a mobile station such as a user equipment (UE). The radio cell or base station includes a first radio transceiving device 210 for transmitting downlink data, i.e. TX data 215 transmitted in DL direction and receiving uplink data, i.e. RX data 216 received in UL direction. The mobile station includes a second radio transceiving device 220 for transmitting uplink data, i.e. TX data 225 transmitted in UL direction and receiving downlink data, i.e. RX data 226 received in DL direction. The communication system 200 may be implemented as a TDD system, in particular according to LTE or alternatively implemented as an FDD system, in particular according to LTE. Both radio transceiving devices 210, 220 may have the same structure, i.e. the following description of the radio transceiving devices 210 of the base station also holds for the radio transceiving device 220 of the mobile station and vice versa.

The radio transceiving device 210 includes a modulation unit 211, a demodulation unit 212 and a waveform adaptation unit 213. The modulation unit 211 modulates transmit data 215 onto a time-frequency resource 219 based on a transmit waveform 217. The transmit waveform 217 may be a transmit pulse, a transmit window or a transmit filter, for example. The demodulation unit 212 demodulates receive data 216 from the time-frequency resource 219 based on a receive waveform 218. The receive waveform 218 may be a receive pulse, a receive window or a receive filter, for example. The waveform adaptation unit 213 adapts the transmit waveform 217 or the receive waveform 218 or both waveforms 217, 218 based on a set of distinct transmit and receive waveforms 214. For a TDD communication system, the transmit data 215 and the receive data 216 are arranged on the time-frequency resource 219 in a time-division duplexing (TDD) manner, e.g. based on a type 2 LTE frame. For an FDD communication system, the transmit data 215 and the receive data 216 are arranged on the time-frequency resource 219 in a frequency-division duplexing (FDD) manner, e.g. based on a type 1 LTE frame.

Note that the radio transceiving device described hereinafter refers to a single radio device which has either an uplink transmitter (UL-TX) and a downlink receiver (DL-RX), for example when the radio transceiving device 220 is implemented in a user equipment (UE) or a downlink transmitter (DL-TX) and an uplink receiver (UL-RX), for example when the radio transceiving device 210 is implemented in a base station (BS). A device may adapt the waveform of its own but not the two on the other side. In one exemplary implementation all four mentioned waveforms (UL-RX, UL-TX, DL-RX, DL-TX) may be distinct, in another exemplary implementation, TX and RX waveforms at BS radio transceiving device 210 may be coupled via adaptation by the waveform adaptation unit 213 and TX and RX waveforms at UE radio transceiving device 220 may be coupled via adaptation by the waveform adaptation unit 223. In a further exemplary implementation, TX waveform at BS radio transceiving device 210 may correspond to TX waveform at UE radio transceiving device 220 due to channel reciprocity and RX waveform at BS radio transceiving device 210 may correspond to RX waveform at UE radio transceiving device 220 due to channel reciprocity. Combinations of these implementations and further waveform examples are possible, as well.

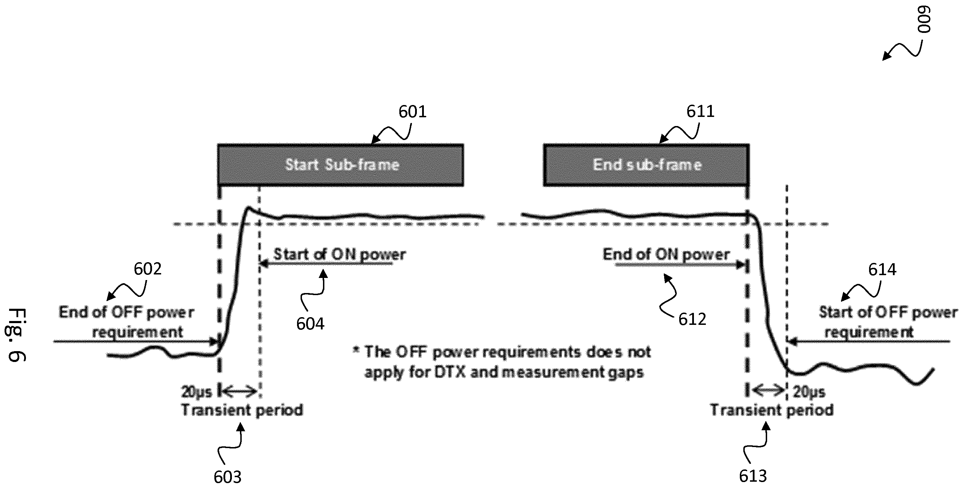

The waveform adaptation unit 213 may adapt the transmit waveform 217 and/or the receive waveform 218 based on a frame structure used to arrange the transmit data 215 and the receive data 216 on the time-frequency resource 219, e.g. as described with respect to Figs. 3 to 5. The waveform adaptation unit 213 may adapt the transmit waveform 217 and/or the receive waveform 218 based on an on-off transient mask of the radio transceiving device 210, e.g. as described with respect to Fig. 6. The waveform adaptation unit 213 may adapt the transmit waveform 217 and/or the receive waveform 218 based on a robustness of the radio transceiving device 210 against noise, inter-channel-interference and/or co-channel interference. The waveform adaptation unit 213 may adapt the transmit waveform 217 and/or the receive waveform 218 based on a duration of the transmit waveform 217 and/or the receive waveform 218. The waveform adaptation unit 213 may adapt the transmit waveform 217 and/or the receive waveform 218 based on a spectrum emission mask of the device specification..

The set of transmit and receive waveforms 214 may include distinct transmit waveforms and receive waveforms for uplink and downlink direction and for transmitter (TX) and receiver (RX) section of the radio transceiving device 210.

The waveform adaptation unit 213 may adapt different transmit 217 or receive 218 waveforms according to a duration of a frame of the frame structure and/or a position of the transmit data 215 and/or the receive data 216 in the frame, in particular, at a beginning, a middle or an end of the frame. For example, distinct waveforms may be applied to the transmit data at a beginning and that at and end of the frame.

The waveform adaptation unit 213 may adapt the transmit waveform 217 according to a predefined transmit waveform design and may adapt the receive waveform 218 based on channel knowledge. For example, for a radio transceiving device 210 of a base station (BS), the transmit waveform 217 may be adapted based on channel knowledge obtained from uplink data. For example, for a radio transceiving device 220 of a mobile station or UE, the transmit waveform 227 may be adapted based on channel knowledge obtained from downlink data.

The waveform adaptation unit 213 may adapt the transmit waveform 217 and the receive waveform 218 according to a downlink-uplink channel reciprocity, e.g. as described below. The waveform adaptation unit 213 may adapt the transmit waveform 217 and the receive waveform 218 such that the overall downlink and uplink channels in terms of channel impulse response and/or channel frequency response remain the same.

The waveform adaptation unit 213 may adapt the transmit waveform 217 for the downlink channel DL based on channel knowledge obtained from the uplink channel UL. The waveform adaptation unit 223 may adapt the transmit waveform 227 for the uplink channel UL based on channel knowledge obtained from the downlink channel DL. Channel knowledge may be received from feedback information, e.g. including channel quality or signal to interference and noise ratio or some channel metric.

The waveform adaptation unit 213 may adapt the transmit waveform 217 either autonomously or based on an indication. For the uplink channel of a radio transceiving device 220 of the mobile station UE, the indication may be an indication from a base station BS as described below. For the downlink channel of a radio transceiving device 210 of the base station BS, the indication may be an indication from the mobile station UE as described below.

The waveform adaptation unit 213 may adapt the transmit waveform 217 and the receive waveform 218 based on a selection from a pool of predefined pairs of transmit and receive waveforms, e.g. as described below.

In the following sections waveform adaptation is described for an exemplary implementation of pulse shaping in a TDD communication system. Variable pulse shaping techniques can be applied. OFDM-based systems are exemplified to address the idea according to the present disclosure. However, the disclosed concept also applies to other single-carrier or multi-carrier based systems.

In OFDM systems, different pulse shaping approaches can be applied to different system resources. For instance, in a TDD system, long duration transmission in the downlink may use OFDM-based pulse shaping **A**, while a short transmission in the uplink can use OFDM pulse shaping **B.** Both pulse shapes can be designed according to the specific characteristics of the transmission scenarios.

Given the different characteristics of different scenarios, the pulse shape can be optimized using different criteria. Some common considerations are: Spectrum emission mask, pulse duration, frame structure, robustness against noise, ICI and co-channel interference, transceiver on-off transient mask and level of allowed power boosting.

The spectrum emission mask is a measurement of the out-of-channel emissions to the in-channel power. It is used to measure the excess emissions that would interfere to other channels or to other systems. This is usually defined in the standard. Radio signals from any transmitter needs to conform to the specification. Therefore, pulse shaping on the transmitter side must be designed according the spectrum mask requirement.

For unidirectional transmission of relatively long duration, e.g., in frequency division duplex systems, the requirement on the pulse duration can be relaxed. While for a TDD system as exemplarily illustrated in Figure 4, a pulse shape with long duration may raise the DL/UL switching overhead significantly. Generally speaking, pulses of short duration are preferred for transmission of packets with short time duration.

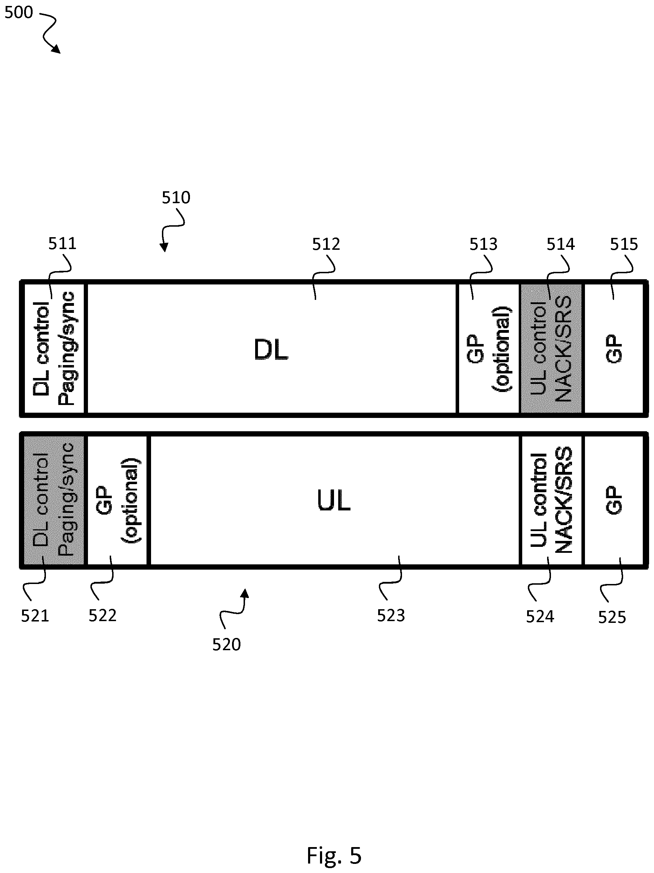

Specific frame structure puts constraint on the pulse shaping design as well. For TDD transmission, a new category of frame structure that may be used for 5G is self-contained transmission as depicted in Figure 5. The DL/UL control information 511, 521 (e.g. scheduling), data 512, 523, and acknowledgement message (e.g., ACK/NACK) 514, 524 are contained in one frame 510, 520. Guard periods (GPs) 515, 522, 525 are used for the DL/UL switching. In this case, while designing the pulse shape used for the control information transmission, the duration of adjacent GPs needs to be considered.

In order to provide reliable performance over the real-world propagation channel, noise and the interference introduced by channel double dispersion is considered for the pulse shape optimization. Pulse shaping according to the disclosure provides time-frequency balancing design to address the robustness against both time and frequency dispersion. Therefore, these targets may be formulated as the pulse shape optimization problem.

The transmitter transient mask is usually specified by the standard, such as 3GPP TS 36.101: "Evolved universal terrestrial radio access (E-UTRA); User equipment radio transmission and reception (Release 13)", Jan. 2016" and 3GPP TS 36.104: "Evolved universal terrestrial radio access (E-UTRA); base station radio transmission and reception (Release 13)", Mar. 2016. In these standards, the general ON-OFF transient period are specified including for example start of subframe 601, end of subframe 611, end of off power requirement 602, transient period 603 for start of subframe 601, start of on power 604 for start of subframe 601, end of on power 612 for end of subframe 611, transient period 613 for end of subframe 611, start of off power requirement for end of subframe 611, as illustrated in Figure 6. For the radio transceiving device 200 this ON-OFF mask is considered, especially for the short transmission case where the transmission duration is comparable to the transient period.

In order to improve the reliability of transmission of very short duration, such as the control message shown in Figure 5, power boosting is used as one of the effective approaches. For the radio transceiving device 200 pulse shaping design considers such power boosting effects.

In the following sections exemplified embodiments for a communication system with variable pulse shaping are described.

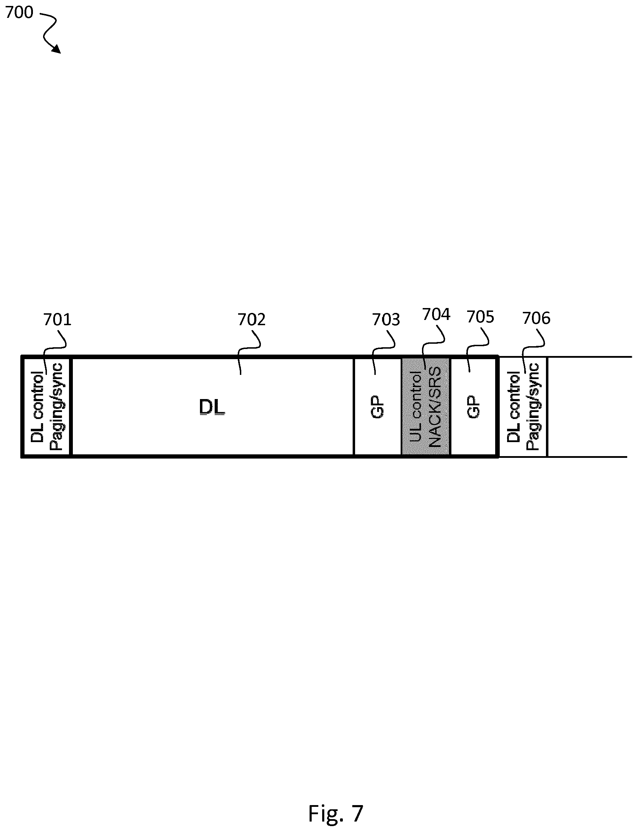

One application according to the present disclosure is within the scope of the self-contained frame structure 500 as depicted in Figure 5, in particular the downlink self-contained frame structure 700 depicted in Figure 7. However, the application of the disclosed concept is not limited to this case.

With respect to the downlink self-contained frame structure 700 depicted in Figure 7, UL ACK/NACK 704 is usually considered to be of short duration, i.e., one symbol for the extreme case, since the frame contains only a few symbols. In addition to ACK/NACK 704, other uplink (UL) control information may include scheduling requests, channel state information reports and channel sounding signals. All of these require high reliability and are crucial especially for systems employing massive number of antennas. However, due to frequent DL/UL switching, short calibration time and limited resource for training signals, robust and reliable transmission of UL control information has become a challenge.

According to the waveform (in particular pulse shape) adaptation concept of the present disclosure variable pulse shapes may be applied to such frame structure 700. More specifically, pulse shaping **A** may be applied to the DL payload transmission, where **A** may be rectangular shape in CP-OFDM which enhances the performance by avoiding ISI. For the short duration transmission in the UL with preceded and succeeded GPs, a dedicated pulse shape **B** can be applied, in order to enhance robustness against noise, ICI, co-channel interference.

The pulses **A** and **B** are either specified using certain parameters, e.g., type, parameters, or pre-defined exclusively as given coefficient sets. For the design or selection of pulse **A** and **B**, different design strategy may be applied. For instance, the DL pulse may be designed to obtain maximum SIR so as to achieve higher data rate; the UL pulse may be designed to improve reliability and robustness against timing misalignment. These pulse shapes can be either specified or dynamically configured according to the requirements of different scenarios.

For TDD systems where the DL and UL channel reciprocity needs to be ensured, the pulse **A** and **B** need to be chosen so that the overall UL and DL channels, in terms of the channel impulse response and channel frequency response including the pulse **A**, B and the wireless radio channel, remain the same.

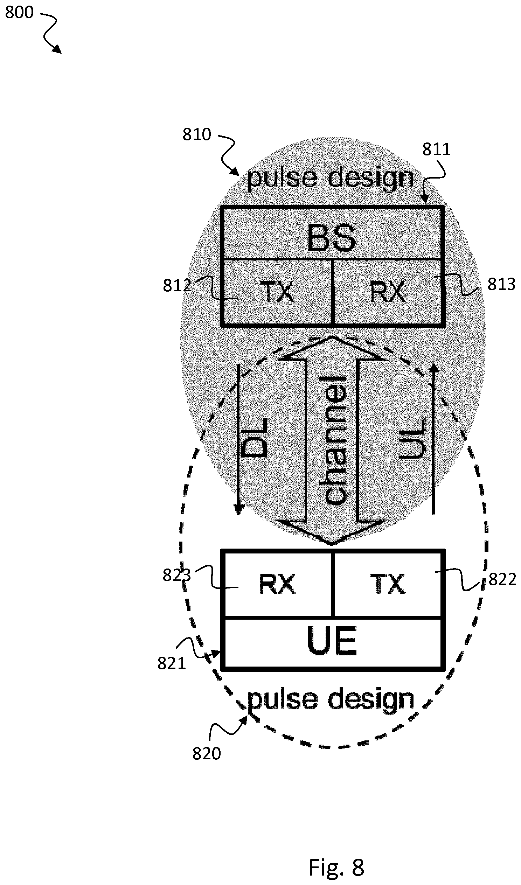

When the symmetric design in the DL and UL is applied, both sides apply the same pulse adaptation strategy. The procedure can be described as an optimization problem for the transmit/receive pulses given the a-priori knowledge of the channel. Since in a TDD system, channel reciprocity is assumed, the pulse design procedure 810, 820 can be carried out at the BS/UE side independently as illustrated in Figure 8. This means, a UE 821 may assume the transmit pulse 822 used in its UL is the same as which is used at the BS 811 in the downlink 812. Thus, no signaling is needed for informing the transmit pulse 822, 812 to the receive side 813, 823.

Aspects of this scheme can be described as the following: Signaling may be required for the BS 811 and the UE 821 to agree on the pulse design 810, 820 principle. In some scenarios, for instance where certain level OOBE is required, the transmit pulses 812, 822 may be specified in the standard. A BS 811 may design the receive pulse 813 in the UL given the channel knowledge obtained in the UL. The same goes for the UE 821 accordingly. If pulse adaptation for TX/RX is allowed, given the channel reciprocity in the TDD system, a BS 811 may design the transmit pulse 812 in the DL based on its channel knowledge obtained in the UL. The same goes for the UE 821 accordingly. Such procedure can be applied autonomously at the BS 811 and the UE 821 side. A pulse indicator may be defined or used to determine whether a UE 821 is allowed to adapt pulse shape autonomously. This indicator may be signaled via a DL signaling channel. Usually, the BS 811 is the master to control UE's 821 pulse shape adaptation procedure.

For TDD, in order to ensure the DL and UL reciprocity, only the DL and UL pulse pair fulfilling the reciprocity may be used and switched on at the same time. This can be done, e.g. in a scheduled way autonomously or according to a switch command, usually from the BS. For instance, according to the following method: 1) Start with a predefined initial pulse pair, e.g. rectangular pulse and CP-OFDM. 2) The DL, UL pulses will be switched on from the $j$-th frame on. 3) Since the channel usually changes continuously, the pulse pair to be used at next time instant should be close to the current pulse pair in use, in order to avoid abrupt pulse type change and significant impact on channel information taking in account of the previous frames.

This puts one more constraint on designing the pulse **A**, **B**. Usually a pool of pulses, say $A_1, A_2, ..., B_1, B_2, ...,$ can be predefined. For a TDD system with the DL and UL channel reciprocity requirement, the pulses $A_k$, $B_k$ need to be jointly designed to fulfill this reciprocity property. This means, when $A_k$ should be used in the DL, $B_k$ should be used in the UL at the same time. When, e.g., due to the channel variation or other requirements, switching should be performed from $A_k$ to $A_k'$ in the DL, then it should be ensured that $B_k$ also switches to $B_k'$, at the same time in the UL. Such a procedure can be according to the following:

$$\text{DL: } \ldots \to A_0 \to A_1 \to A_0 \to A_1 \to A_2 \to \ldots$$
$$\text{UL: } \ldots \to B_0 \to B_1 \to B_0 \to B_1 \to B_2 \to \ldots$$
$$\xrightarrow{\hspace{4cm}} time$$

and can be realized by explicitly signaling the pulse type, e.g. by a pulse indicator, often from BS 811 to UE 821 but also from UE 821 to BS 811.

Other variants as described in the following section can be applied as well. Given the channel reciprocity assumption in a TDD system, the transmitter and the receiver may finely choose and/or optimize the pulse shape parameters according to the channel it experienced/estimated. The pulse shapes may be pre-defined as a pulse pool which consists of different type of pulse shapes with different features. The transmitter and the receiver may finely choose the pulse shape based on the channel it experienced or estimated. In case of transmissions where reliable channel knowledge is available, the transmitter and the receiver may use a pre-defined pulse shape and adapt the pulse shape based on the later acquired channel knowledge. The pulse adaption procedure may be carried out iteratively or repeated over time.

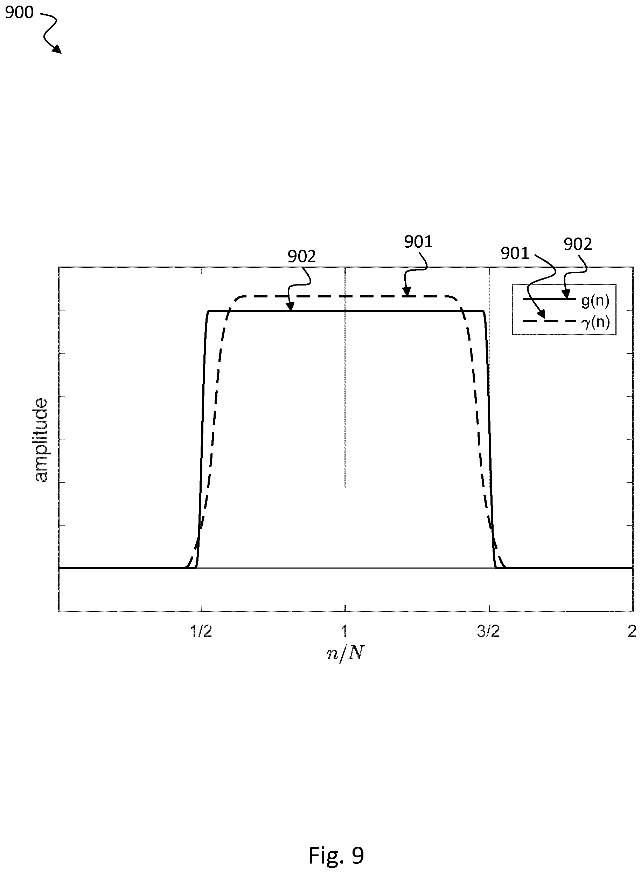

Fig. 9 shows a time diagram illustrating an exemplary waveform design 900 of a transmit waveform 902 and a receive waveform 901 for an exemplary OFDM communication system in a high noise at receiver scenario where the receive waveform 901 is adapted by the receiver according to the disclosure.

Given a raised-cosine shaped transmit pulse $g[n]$ 902, high noise level at the receiver, the receiver adapts the receive pulse shape $\gamma[n]$ 901 in order to achieve maximum signal to interference and noise ratio based on the knowledge of the channel statistics. The pulse shapes $g[n]$ 902 and $\gamma[n]$ 901 are illustrated in Fig. 9.

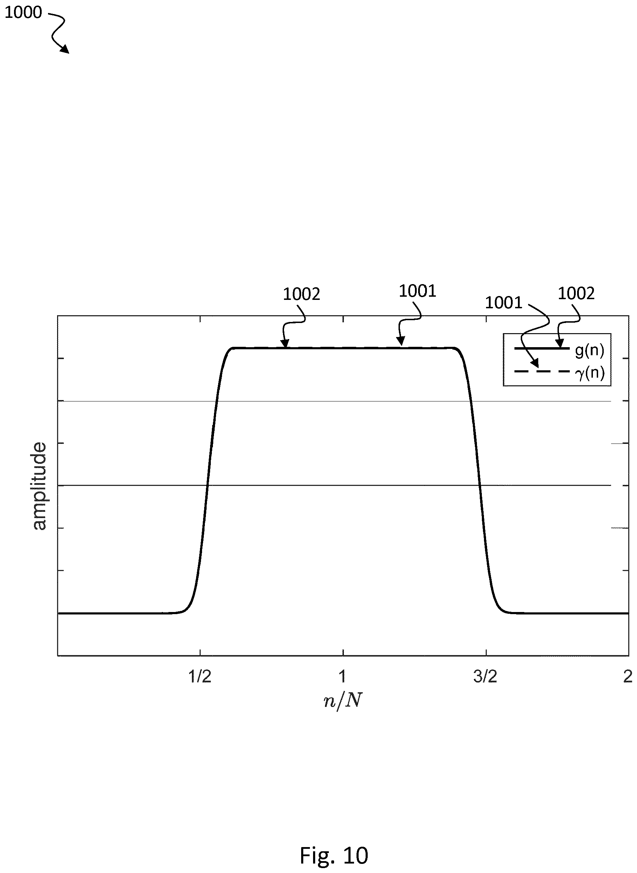

Fig. 10 shows a time diagram illustrating an exemplary waveform design 1000 of a transmit waveform 1002 and a receive waveform 1001 for an exemplary OFDM communication system in a high noise at receiver scenario where the receiver waveform 1001 is adapted by the receiver and the transmit waveform 1002 is adapted by the transmitter according to the disclosure.

Given a raised-cosine shaped transmit pulse $g_0[n]$, high noise level, the receiver adapts the receive pulse shape $\gamma_0[n]$ in order to achieve maximum signal to interference and noise ratio based on the knowledge of the channel statistics.

In the second iteration, the transmitter adapts the transmit pulse shape $g_1[n]$ according to the receive pulse shape $\gamma_0[n]$ using the same principle. After 14 iterations, the pulse shapes $g[n]$ 1002 and $\gamma[n]$ 1001 are illustrated in Fig. 10.

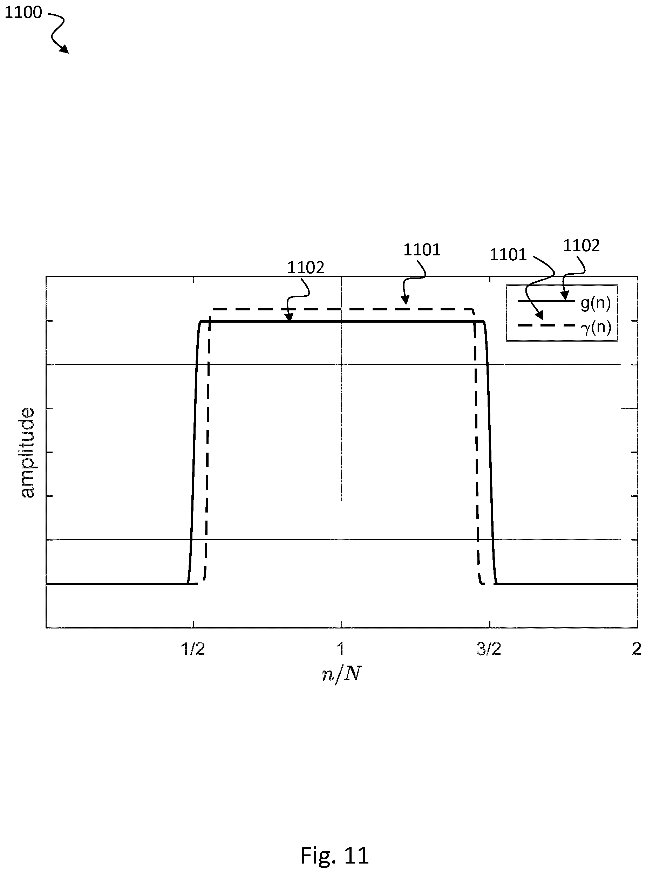

Fig. 11 shows a time diagram illustrating an exemplary waveform design 1100 of a transmit waveform 1102 and a receive waveform 1101 for an exemplary OFDM communication system in a low noise at receiver scenario where the receive waveform 1101 is adapted by the receiver according to the disclosure.

Given a raised-cosine shaped transmit pulse $g[n]$ 1102, low noise level at the receiver, the receiver adapts the receive pulse shape $\gamma[n]$ 1101 in order to achieve maximum signal to interference and noise ratio based on the knowledge of the channel statistics. The pulse shapes $g[n]$ 1102 and $\gamma[n]$ 1101 are illustrated in Fig. 11.

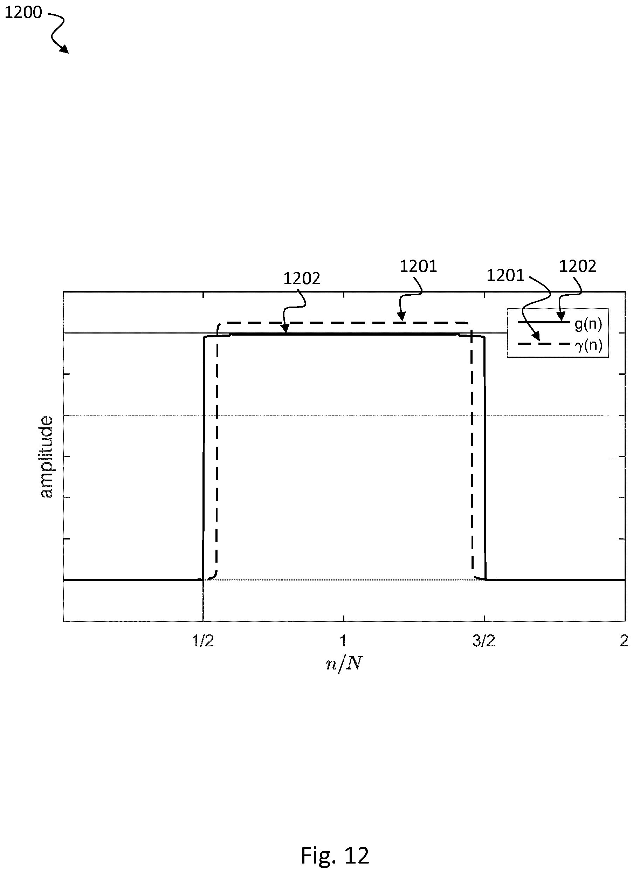

Fig. 12 shows a time diagram illustrating an exemplary waveform design 1200 of a transmit waveform 1202 and a receive waveform 1201 for an exemplary OFDM communication system in a low noise at receiver scenario where the receiver waveform 1201 is adapted by the receiver and the transmit waveform 1202 is adapted by the transmitter according to the disclosure.

Given a raised-cosine shaped transmit pulse $g_0[n]$, low noise level, the receiver adapts the receive pulse shape $\gamma_0[n]$ in order to achieve maximum signal to interference and noise ratio based on the knowledge of the channel statistics. In the second iteration, the transmitter adapts the transmit pulse shape $g_1[n]$ according to the receive pulse shape $\gamma_0[n]$ using the same principle. After 10 iterations, the pulse shapes $g[n]$ 1202 and $\gamma[n]$ 1201 are illustrated in Fig. 12.

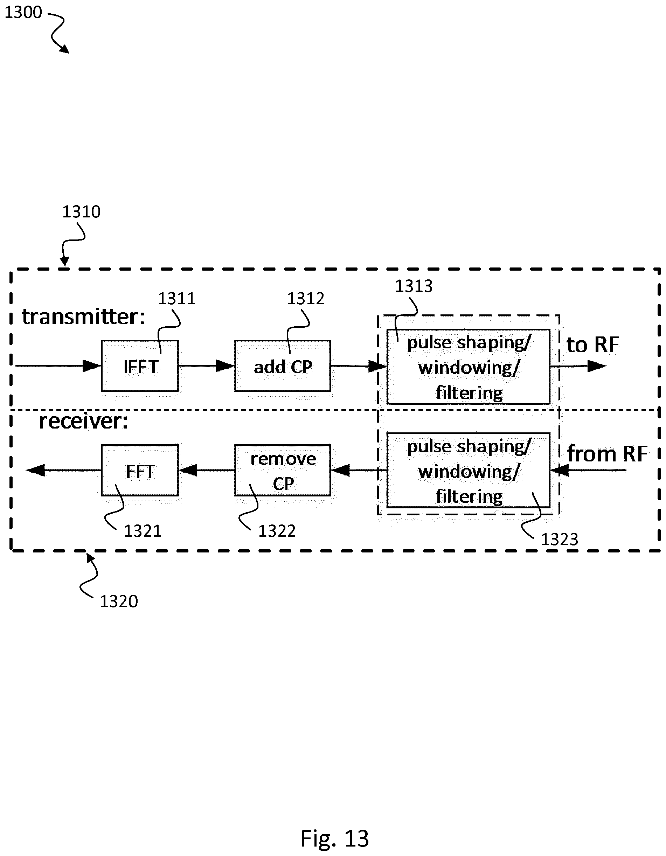

Fig. 13 shows a block diagram illustrating an exemplary OFDM-based orthogonal waveform transceiver 1300 according to the disclosure. The transmitter TX 1310 includes an IFFT (Inverse Fast Fourier Transform) unit 1311, a CP (cyclic prefix) adding unit 1312 and a waveform adaption (pulse shaping, windowing, filtering) unit 1313 for modulating TX data onto an RF time-frequency resource. The receiver RX 1320 includes a waveform adaption (pulse shaping, windowing, filtering) unit 1323, a CP (cyclic prefix) removing unit 1322 and an FFT (Fast Fourier Transform) unit 1321 for demodulating RX data from an RF time-frequency resource.

Unlike the pulse shaping/windowing OFDM where subcarrier level pulse shaping is applied, another waveform candidates for the next generation radio access technology is filtered-OFDM where sub-band level filtering is applied. The transceiver block diagram shown in Fig. 13 can be applied to both the pulse-shaping and the filtering cases.

The pulse shape and filter adaptation techniques according to the present disclosure can be further applied to other non-orthogonal waveforms, such as filter-bank multicarrier (FBMC) and generalized frequency division multiplexing (GFDM).

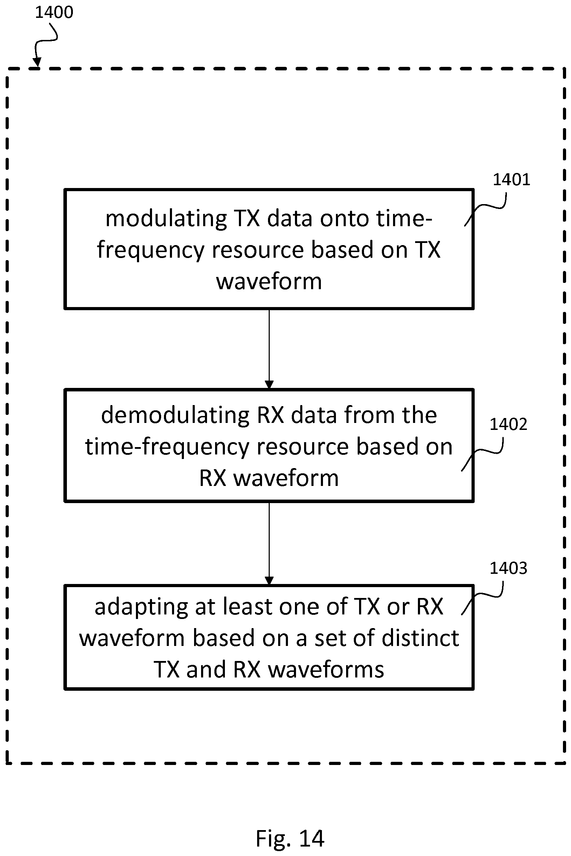

Fig. 14 shows a schematic diagram illustrating an exemplary radio transceiving method 1400 according to the disclosure.

The radio transceiving method 1400 includes modulating 1401 transmit data onto a time-frequency resource based on a transmit waveform, in particular a transmit pulse, a transmit window or a transmit filter, e.g. as described above with respect to Figs. 2 to 13. The radio transceiving method 1400 includes demodulating 1402 receive data from the time-frequency resource based on a receive waveform, in particular a receive pulse, a receive window or a receive filter, wherein the transmit data and the receive data are arranged on the time-frequency resource, in particular in a time-division duplexing (TDD) manner, e.g. as described above with respect to Figs. 2 to 13. The radio transceiving method 1400 includes adapting 1403 at least one of the transmit waveform and the receive waveform based on a set of distinct transmit and receive waveforms, e.g. as described above with respect to Figs. 2 to 13.

The method 1400 may refer to the radio transceiving device 210, 220 as described above with respect to Figure 2. The same note as indicated above with respect to Fig. 2 also applies for this method 1400. I.e., the radio transceiving device refers to a single radio device which has either an uplink transmitter (UL-TX) and a downlink receiver (DL-RX), for example when the radio transceiving device 220 is implemented in a user equipment (UE) or a downlink transmitter (DL-TX) and an uplink receiver (UL-RX), for example when the radio transceiving device 210 is implemented in a base station (BS). A device may adapt the waveform of its own but not the two on the other side. In one exemplary implementation all four mentioned waveforms (UL-RX, UL-TX, DL-RX, DL-TX) may be distinct, in another exemplary implementation, TX and RX waveforms at BS radio transceiving device 210 may be coupled via adaptation by the waveform adaptation unit 213 and TX and RX waveforms at UE radio transceiving device 220 may be coupled via adaptation by the waveform adaptation unit 223. In a further exemplary implementation, TX waveform at BS radio transceiving device 210 may correspond to TX waveform at UE radio transceiving device 220 due to channel reciprocity and RX waveform at BS radio transceiving device 210 may correspond to RX waveform at UE radio transceiving device 220 due to channel reciprocity. Combinations of these implementations and further waveform examples are possible, as well.

The present disclosure also relates to a computer program being configured to implement the method 1400 described above with respect to fig. 14 when executed on a computer.

The present disclosure also supports a computer program product including computer executable code or computer executable instructions that, when executed, causes at least one computer to execute the performing and computing steps described herein, in particular the steps of the methods 1400 described above. Such a computer program product may include a readable non-transitory storage medium storing program code thereon for use by a computer. The program code may perform the performing and computing steps described herein, in particular the method 1400 described above.

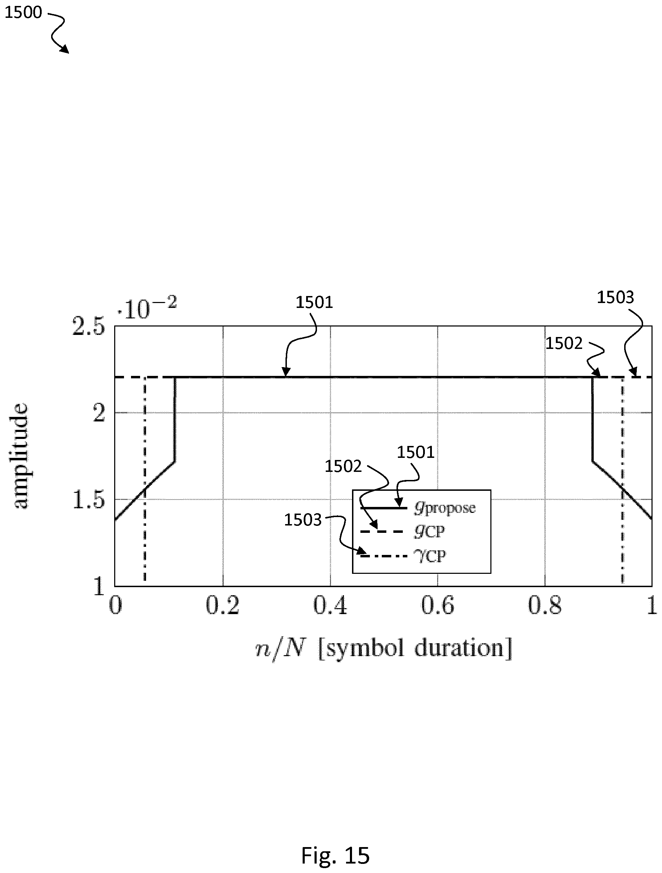

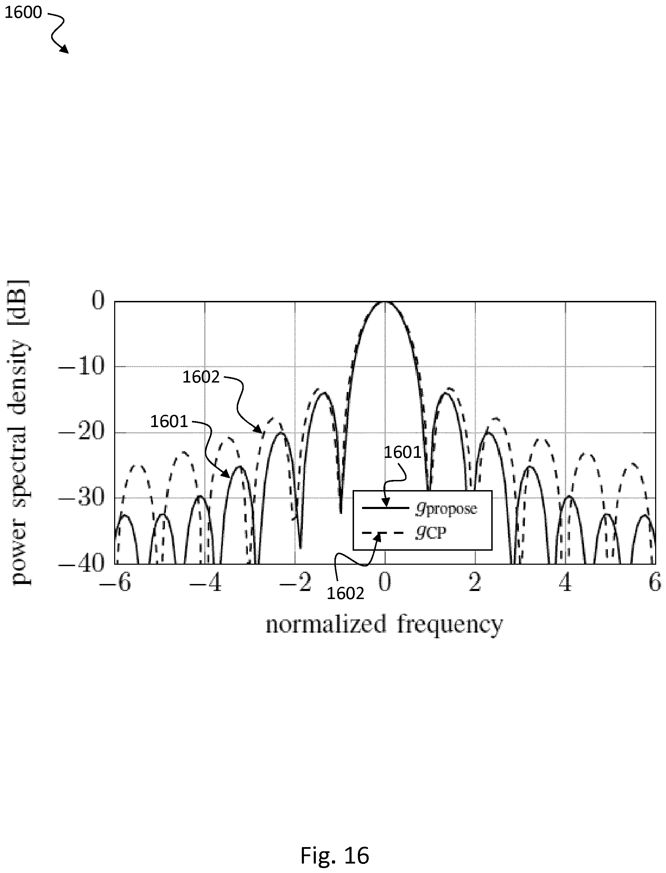

Fig. 15 shows a schematic diagram illustrating an exemplary pulse shape design 1500 for a CP-OFDM and a P-OFDM communication system according to the disclosure. Fig. 16 shows a schematic diagram illustrating an exemplary power density 1600 of the designed pulse for pulse-shaped CP-OFDM and P-OFDM depicted in Fig. 15.

The disclosed waveform adaptation technique is evaluated for the UL transmission in the self-contained subframe as shown in Figure 7. Owing to the neighbouring GPs, this symbol is ISI-free. Hence, a pulse shape with relaxed time localization but better frequency localization than CP-OFDM is preferred.

For the performance evaluation, the matched pulse shape design is adopted in order to achieve maximum SNR at the receiver side and pulse shape $g_{propose}$ 1501, i.e. pulse shaping according to the disclosure, is used for the UL link transmission. CP-OFDM 1502, 1503 with the same numerology is taken for comparison. The pulse shapes for CP-OFDM 1502, 1503 and the pulse shaped OFDM 1501 schemes are depicted in Figure 15. In Figure 16, the power spectral density of pulse shaped OFDM 1601 is compared with that of CP-OFDM 1602. It can be seen that the pulse using the disclosed pulse shaping 1501, 1601 shows better frequency localization, namely more than 3 dB lower in terms of power spectral density starting from the second sidelobe.

Link level simulations are carried out to evaluate the BLER performance of the UL transmission in Figure 7. It is assumed that the UL consists of a single OFDM symbol and a relatively large bandwidth of 90 MHz. For both schemes, namely OFDM with pulse shaping according to the disclosure and CP-OFDM, the subcarrier spacing is set to 45 KHz and symbol period to 25 $\mu$s.

As for the environment, the extended vehicular A (EVA) channel model is adopted. The maximal excess delay of this channel is 2.7 $\mu$s, equals to the CP length in the case of CP-OFDM. For a short burst transmission as short as 25 $\mu$s, the ON-OFF time mask of a transmitter needs to be taken into account. According to Figure 6, the transient period of nowadays UE transmitters lies around 20 $\mu$s. Here, a timing offset of 3 $\mu$s is introduced. Such an offset can be regarded as realistic for the target scenario.

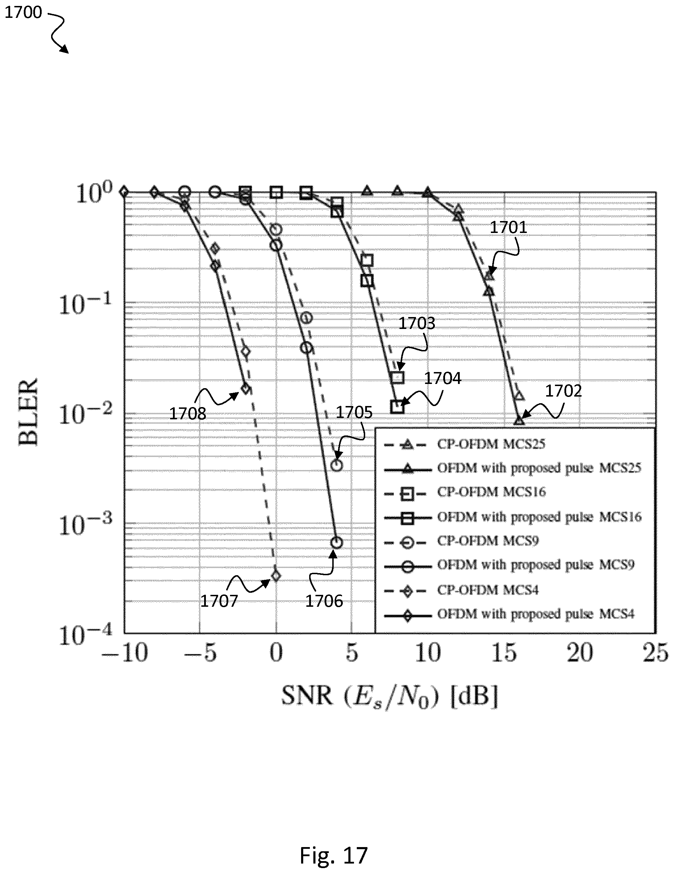

In Figure 17, block error rate (BLER) for transmission without timing misalignment is shown. Different modulation and coding schemes (MCSs) are simulated: MCS 25 with CP-OFDM 1701, MCS 25 with disclosed ("proposed") pulse shaping OFDM 1702, MCS 16 with CP-OFDM 1703, MCS 16 with disclosed ("proposed") pulse shaping OFDM 1704, MCS 9 with CP-OFDM 1705, MCS 9 with disclosed ("proposed") pulse shaping OFDM 1706, MCS 4 with CP-OFDM 1707, MCS 4 with disclosed ("proposed") pulse shaping OFDM 1708. It can be observed that an SNR gain of 0.5 dB is obtained by pulse shaping according to the disclosure in comparison to CP-OFDM for all simulated modulation and coding schemes (MCSs). This attributes to the disclosed pulse design which enables matched filtering at the transmitter and the receiver; while for CP-OFDM, discarding CP causes energy loss.

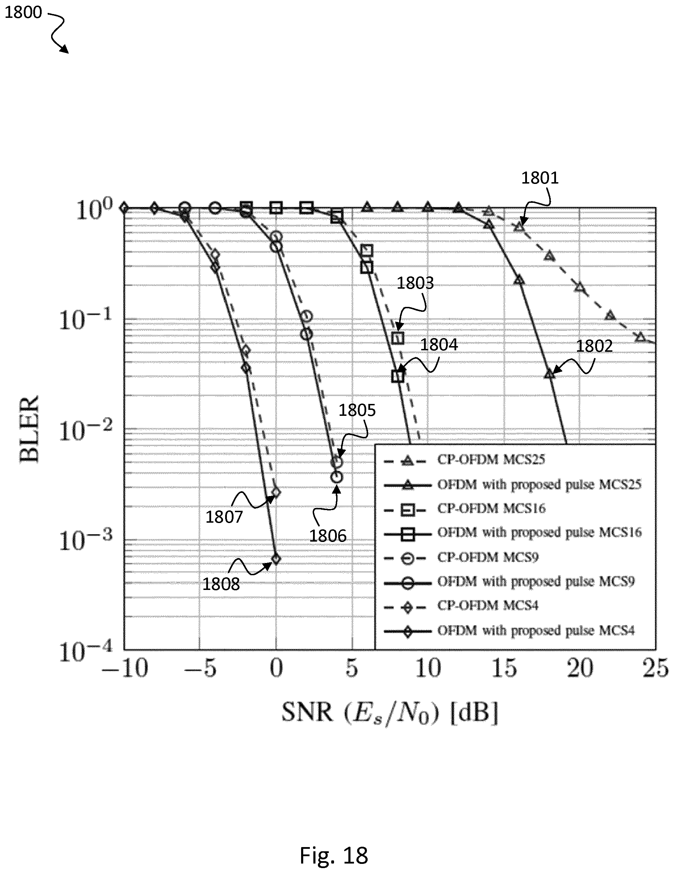

In Figure 18, results for transmission with symbol timing error is presented. The same MCSs as described above with respect to Fig. 17 are simulated: MCS 25 with CP-OFDM 1801, MCS 25 with disclosed ("proposed") pulse shaping OFDM 1802, MCS 16 with CP-OFDM 1803, MCS 16 with disclosed ("proposed") pulse shaping OFDM 1804, MCS 9 with CP-OFDM 1805, MCS 9 with disclosed ("proposed") pulse shaping OFDM 1806, MCS 4 with CP-OFDM 1807, MCS 4 with disclosed ("proposed") pulse shaping OFDM 1808. In the lower SNR region, namely noise dominated scenario, a 0.5 dB gain can be observed. While in the higher SNR region, CP-OFDM suffers more from a timing offset beyond the CP range. This means, in an interference scenario dominated by timing errors, pulse-shaped OFDM according to the disclosure outperforms CP-OFDM significantly and allows usage of higher order modulation and coding scheme.

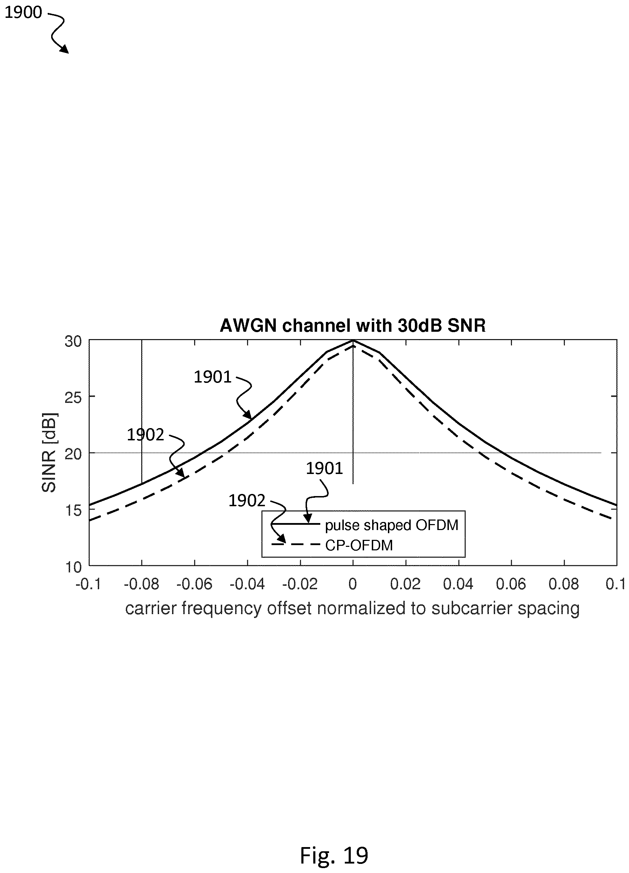

Figure 19 shows the link performance in terms of receive SINR against carrier frequency offsets. Thanks to the improved frequency localization of the disclosed pulse shape, a 1 dB gain can be observed within the range of carrier frequency offsets considered for the disclosed pulse shaped OFDM 1901 versus CP-OFDM 1902.

Typical applications of waveform adaption techniques according to the disclosure include: Mobile radio access of massive machine type communication which is described as sporadic low data-rate traffic; Mobile radio services with latency constraint; and Service oriented radio system, where adverse performance requirements of different services need to be fulfilled.

Although pulse shaped OFDM according to the disclosure is considered as the enabling technology in this disclosure, the design principle can be applied to TDD systems enabled by other waveforms. Examples include but are not limited to filtered-OFDM (f-OFDM), universal filtered-OFDM (UF-OFDM), windowed-OFDM, etc., for example as described in the documents [R1-162889]: Nokia, Alcatel-Lucent Shanghai Bell, "OFDM based Waveform for 5G new radio interface", 3GPP RAN1#84-bis, April 2016, [R1-162152]: Huawei, Hisilicon, "OFDM based flexible waveform for 5G", 3GPP RAN1#84-bis, April 2016, and [R1-162199]: Qualcomm, "Waveform candidates", 3GPP RAN1#84-bis, April 20.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. The invention is solely defined by the appended claims.

**Claims**

1. A radio transceiving device (210, 220), comprising:

   a modulation unit (211, 221), configured to modulate transmit data (215, 225) onto a time-frequency resource (219, 229) based on a transmit waveform (217, 227), wherein the transmit waveform is a transmit pulse, a transmit window or a transmit filter;
   a demodulation unit (212, 222), configured to demodulate receive data (216, 226) from the time-frequency resource (219, 229) based on a receive waveform (218, 228), wherein the receive waveform is a receive pulse, a receive window or a receive filter,
   wherein the transmit data (215, 225) and the receive data (216, 226) are arranged on the time-frequency resource (219, 229) in a time-division duplexing, TDD, manner; and
   a waveform adaptation unit (213, 223) configured to adapt the transmit waveform (217, 227) and the receive waveform (218, 228) based on a set of distinct transmit and receive waveforms (214, 224) and according to a downlink-uplink channel reciprocity.

2. The radio transceiving device (210, 220) of claim 1, wherein the waveform adaptation unit (213, 223) is configured to adapt at least one of the transmit waveform (217, 227) and the receive waveform (218, 228) based on at least one of the following criteria:

   a frame structure used to arrange the transmit data (215, 225) and the receive data (216, 226) on the time-frequency resource (219, 229);
   an on-off transient mask of the radio transceiving device (210, 220);
   a robustness of the radio transceiving device (210, 220) against noise, inter-channel-interference and/or co-channel interference;
   a duration of the transmit waveform (217, 227) and/or the receive waveform (218, 228);
   a spectrum emission mask of the time-frequency resource (219, 229).

3. The radio transceiving device (210, 220) of claim 1 or 2,
   wherein the set of transmit and receive waveforms (214, 224) comprises distinct transmit waveforms and receive waveforms for uplink and downlink direction as well as for transmitter, TX, and receiver, RX, section of the radio transceiving device (210, 220).

4. The radio transceiving device (210, 220) of claim 2,
   wherein the waveform adaptation unit (213, 223) is configured to adapt different transmit (217, 227) or receive (218, 228) waveforms according to a duration of a frame of the frame structure and/or a position of the transmit data (215, 225) and/or the receive data (216, 226) in the frame, wherein the position is at a beginning, a middle or an end of the frame.

5. The radio transceiving device (210, 220) of claim 3 or 4,

wherein the waveform adaptation unit (213, 223) is configured to adapt the transmit waveform (217, 227) according to a predefined transmit waveform design and to adapt the receive waveform (218, 228) based on channel knowledge obtained from uplink data for a radio transceiving device (210) of a base station, BS, or based on channel knowledge obtained from downlink data for a radio transceiving device (220) of a mobile station, MS.

6. The radio transceiving device (210, 220) of claim 1, wherein the waveform adaptation unit (213, 223) is configured to adapt the transmit waveform (217, 227) and the receive waveform (218, 228) such that the overall downlink and uplink channels in terms of channel impulse response and/or channel frequency response remain the same.

7. The radio transceiving device (210) of claim 6, wherein the radio transceiving device (210) is for a base station, BS, wherein the waveform adaptation unit (213) is configured to adapt the transmit waveform (217) for the downlink channel, DL, based on channel knowledge obtained from the uplink channel, UL.

8. The radio transceiving device (220) of claim 6, wherein the radio transceiving device (220) for a mobile station, UE, wherein the waveform adaptation unit (223) is configured to adapt the transmit waveform (227) for the uplink channel, UL, based on channel knowledge obtained from the downlink channel, DL.

9. The radio transceiving device (210, 220) of one of claims 7 to 8, wherein the waveform adaptation unit (213, 223) is configured to adapt the transmit waveform (217, 227) either autonomously or based on an indication for the uplink channel of a radio transceiving device (220) of a mobile station, UE, based on an indication from a base station, BS, or for the downlink channel of a radio transceiving device (210) of the base station, BS, based on an indication from the mobile station, UE.

10. The radio transceiving device (210, 220) of one of claims 7 to 9, wherein the waveform adaptation unit (213, 223) is configured to adapt the transmit waveform (217, 227) and the receive waveform (218, 228) based on a selection from a pool of predefined pairs of transmit and receive waveforms.

11. A time division duplexing, TDD, system (200), comprising:

   a base station, comprising a first radio transceiving device (210) according to one of claims 1 to 11 for transmitting downlink data (215) and receiving uplink data (216); and
   a mobile station comprising a second radio transceiving device (220) according to one of claims 1 to 12 for transmitting uplink data (225) and receiving downlink data (226).

12. A radio transceiving method (1400), comprising:

   modulating (1401) transmit data onto a time-frequency resource based on a transmit waveform, wherein the transmit waveform is a transmit pulse, a transmit window or a transmit filter;
   demodulating (1402) receive data from the time-frequency resource based on a receive waveform, wherein the receive waveform is a receive pulse, a receive window or a receive filter;
   wherein the transmit data and the receive data are arranged on the time-frequency resource in a time-division duplexing, TDD, manner; and
   adapting (1403) the transmit waveform and the receive waveform based on a set of distinct transmit and receive waveforms and according to a downlink-uplink channel reciprocity.

13. Computer program comprising instructions which, when the program is executed by a computer, cause the computer to carry out the method of claim 12.


**Patentansprüche**

1. Funksendeempfangsvorrichtung (210, 220), umfassend:

   eine Modulationseinheit (211, 221), die konfiguriert ist, um Sendedaten (215, 225) auf eine Zeit-Frequenz-Ressource (219, 229) basierend auf einer Sendewellenform (217, 227) zu modulieren, wobei die Sendewellenform ein Sendeimpuls, ein Sendefenster oder ein Sendefilter ist;
   eine Demodulationseinheit (212, 222), die konfiguriert ist, um Empfangsdaten (216, 226) von der Zeit-Frequenz-Ressource (219, 229) basierend auf einer Empfangswellenform (218, 228) zu demodulieren, wobei die Empfangswellenform ein Empfangsimpuls, ein Empfangsfenster oder ein Empfangsfilter ist;
wobei die Sendedaten (215, 225) und die Empfangsdaten (216, 226) auf der Zeit-Frequenz-Ressource (219, 229) in einer Art des Zeitduplexens (Time-Division Duplexing, TDD) angeordnet sind; und
eine Wellenformanpassungseinheit (213, 223), die konfiguriert ist, um die Sendewellenform (217, 227) und die Empfangswellenform (218, 228) basierend auf einem Satz unterschiedlicher Sende- und Empfangswellenformen (214, 224) und gemäß einer Downlink-Uplink-Kanalreziprozität anzupassen.

2. Funksendeempfangsvorrichtung (210, 220) nach Anspruch 1, wobei die Wellenformanpassungseinheit (213, 223) konfiguriert ist, um die Sendewellenform (217, 227) und/oder die Empfangswellenform (218, 228) basierend auf mindestens einem der folgenden Kriterien anzupassen:

eine Rahmenstruktur, die verwendet wird, um die Sendedaten (215, 225) und die Empfangsdaten (216, 226) auf der Zeit-Frequenz-Ressource (219, 229) anzuordnen;
eine Ein-Aus-Übergangsmaske der Funksendeempfangsvorrichtung (210, 220);
eine Robustheit der Funksendeempfangsvorrichtung (210, 220) gegenüber Rauschen, Interkanalinterferenzen und/oder Nachbarkanalinterferenzen;
eine Dauer der Sendewellenform (217, 227) und/oder der Empfangswellenform (218, 228);
eine Spektrumsemissionsmaske der Zeit-Frequenz-Ressource (219, 229).

3. Funksendeempfangsvorrichtung (210, 220) nach Anspruch 1 oder 2,
wobei der Satz von Sende- und Empfangswellenformen (214, 224) unterschiedliche Sende- und Empfangswellenformen für die Uplink- und Downlink-Richtung sowie für den Sender- (TX) und Empfänger (RX-)Abschnitt der Funksendeempfangsvorrichtung (210, 220) umfasst.

4. Funksendeempfangsvorrichtung (210, 220) nach Anspruch 2,
wobei die Wellenformanpassungseinheit (213, 223) konfiguriert ist, um verschiedene Sende- (217, 227) oder Empfangswellenformen (218, 228) gemäß einer Dauer eines Rahmens der Rahmenstruktur und/oder einer Position der Sendedaten (215, 225) und/oder der Empfangsdaten (216, 226) in dem Rahmen anzupassen, wobei sich die Position an einem Anfang, einer Mitte oder einem Ende des Rahmens befindet.

5. Funksendeempfangsvorrichtung (210, 220) nach Anspruch 3 oder 4,
wobei die Wellenformanpassungseinheit (213, 223) konfiguriert ist, um die Sendewellenform (217, 227) gemäß einem vordefinierten Sendewellenformentwurf anzupassen und die Empfangswellenform (218, 228) basierend auf dem Kanalwissen, das aus Uplink-Daten für eine Funksendeempfangsvorrichtung (210) einer Basisstation (BS) erhalten wurde, oder basierend auf Kanalwissen, das aus Downlink-Daten für eine Funksendeempfangsvorrichtung (220) einer Mobilstation (MS) erhalten wurde, anzupassen.

6. Funksendeempfangsvorrichtung (210, 220) nach Anspruch 1,
wobei die Wellenformanpassungseinheit (213, 223) konfiguriert ist, um die Sendewellenform (217, 227) und die Empfangswellenform (218, 228) so anzupassen, dass die Downlink- und Uplink-Kanäle in Bezug auf die Kanalimpulsantwort und/oder die Kanalfrequenzantwort insgesamt gleich bleiben.

7. Funksendeempfangsvorrichtung (210) nach Anspruch 6, wobei die Funksendeempfangsvorrichtung (210) für eine Basisstation (BS) dient,
wobei die Wellenformanpassungseinheit (213) konfiguriert ist, um die Sendewellenform (217) für den Downlink (DL)-Kanal basierend auf dem von dem Uplink (UL)-Kanal erhaltenen Kanalwissen anzupassen.

8. Funksendeempfangsvorrichtung (220) nach Anspruch 6, wobei die Funksendeempfangsvorrichtung (220) für eine Mobilstation (UE) dient,
wobei die Wellenformanpassungseinheit (223) konfiguriert ist, um die Sendewellenform (227) für den Uplink (UL)-Kanal basierend auf dem von dem Downlink (DL)-Kanal erhaltenen Kanalwissen anzupassen.

9. Funksendeempfangsvorrichtung (210, 220) nach einem der Ansprüche 7 bis 8, wobei die Wellenformanpassungseinheit (213, 223) konfiguriert ist, um die Sendewellenform (217, 227) entweder autonom oder basierend auf einer Angabe für den Uplink-Kanal einer Funksendeempfangsvorrichtung (220) einer Mobilstation (UE) basierend auf einer Angabe von einer Basisstation (BS) oder für den Downlink-Kanal einer Funksendeempfangsvorrichtung (210) der Basisstation (BS) basierend auf einer Angabe von der Mobilstation (UE) anzupassen.

**10.** Funksendeempfangsvorrichtung (210, 220) nach einem der Ansprüche 7 bis 9, wobei die Wellenformanpassungseinheit (213, 223) konfiguriert ist, um die Sendewellenform (217, 227) und die Empfangswellenform (218, 228) basierend auf einer Auswahl aus einem Pool vordefinierter Paare von Sende- und Empfangswellenformen anzupassen.

**11.** Zeitmultiplex (Time Division Duplexing, TDD)-System (200), umfassend:

eine Basisstation, umfassend eine erste Funksendeempfangsvorrichtung (210) nach einem der Ansprüche 1 bis 11 zum Senden von Downlink-Daten (215) und Empfangen von Uplink-Daten (216); und

eine Mobilstation, die eine zweite Funksendeempfangsvorrichtung (220) nach einem der Ansprüche 1 bis 12 zum Senden von Uplink-Daten (225) und zum Empfangen von Downlink-Daten (226) umfasst.

**12.** Funksendeempfangsverfahren (1400), umfassend:

Modulieren (1401) von Sendedaten auf eine Zeit-Frequenz-Ressource basierend auf einer Sendewellenform, wobei die Sendewellenform ein Sendeimpuls, ein Sendefenster oder ein Sendefilter ist;

Demodulieren (1402) von Empfangsdaten von der Zeit-Frequenz-Ressource basierend auf einer Empfangswellenform, wobei die Empfangswellenform ein Empfangsimpuls, ein Empfangsfenster oder ein Empfangsfilter ist;

wobei die Sendedaten und die Empfangsdaten auf der Zeit-Frequenz-Ressource in einer Art des Zeitduplexens (TDD) angeordnet sind; und

Anpassen (1403) der Sendewellenform und der Empfangswellenform basierend auf einem Satz von unterschiedlichen Sende- und Empfangswellenformen und gemäß einer Downlink-Uplink-Kanalreziprozität.

**13.** Computerprogramm, umfassend Anweisungen, die bei Ausführung des Programms durch einen Computer den Computer veranlassen, das Verfahren nach Anspruch 12 auszuführen.

**Revendications**

**1.** Dispositif de transmission-réception radio (210, 220), comprenant :

une unité de modulation (211, 221), configurée pour moduler des données de transmission (215, 225) sur une ressource temps-fréquence (219, 229) sur la base d'une forme d'onde de transmission (217, 227), dans lequel la forme d'onde de transmission est une impulsion de transmission, une fenêtre de transmission ou un filtre de transmission ;

une unité de démodulation (212, 222), configurée pour démoduler des données de réception (216, 226) à partir de la ressource temps-fréquence (219, 229) sur la base d'une forme d'onde de réception (218, 228), dans lequel la forme d'onde de réception est une impulsion de réception, une fenêtre de réception ou un filtre de réception,

dans lequel les données de transmission (215, 225) et les données de réception (216, 226) sont agencées sur la ressource temps-fréquence (219, 229) d'une manière par duplexage par répartition dans le temps (TDD) ; et

une unité d'adaptation de forme d'onde (213, 223) configurée pour adapter la forme d'onde de transmission (217, 227) et/ou la forme d'onde de réception (218, 228) sur la base d'un ensemble de formes d'onde de transmission et de réception distinctes (214, 224) et en fonction d'une réciprocité de canal de liaison descendante-de liaison montante.

**2.** Dispositif de transmission-réception radio (210, 220) selon la revendication 1, dans lequel l'unité d'adaptation de forme d'onde (213, 223) est configurée pour adapter la forme d'onde de transmission (217, 227) et/ou la forme d'onde de réception (218, 228) sur la base d'au moins l'un des critères suivants :

une structure de trame utilisée pour agencer les données de transmission (215, 225) et les données de réception (216, 226) sur la ressource temps-fréquence (219, 229) ;

un masque transitoire de marche-arrêt du dispositif de transmission-réception radio (210, 220) ;

une robustesse du dispositif de transmission-réception radio (210, 220) contre un bruit, des interférence entre canaux et/ou des interférences co-canal ;

une durée de la forme d'onde de transmission (217, 227) et/ou de la forme d'onde de réception (218, 228) ;

un masque d'émission de spectre de la ressource temps-fréquence (219, 229).

**3.** Dispositif de transmission-réception radio (210, 220) selon la revendication 1 ou 2, dans lequel l'ensemble de formes d'onde de transmission et de réception (214, 224) comprend des formes d'onde de transmission distinctes et des formes d'onde de réception distinctes pour une direction de liaison montante et de liaison descendante ainsi que pour une section d'émetteur (TX) et de récepteur (RX) du dispositif de transmission-réception radio (210, 220).

**4.** Dispositif de transmission-réception radio (210, 220) selon la revendication 2,
dans lequel l'unité d'adaptation de forme d'onde (213, 223) est configurée pour adapter différentes formes d'onde de transmission (217, 227) ou de réception (218, 228) en fonction d'une durée d'une trame de la structure de trame et/ou d'une position des données de transmission (215, 225) et/ou des données de réception (216, 226) dans la trame, dans lequel la position est au début, au milieu ou à la fin de la trame.

**5.** Dispositif de transmission-réception radio (210, 220) selon la revendication 3 ou 4, dans lequel l'unité d'adaptation de forme d'onde (213, 223) est configurée pour adapter la forme d'onde de transmission (217, 227) en fonction d'une conception de forme d'onde de transmission prédéfinie et pour adapter la forme d'onde de réception (218, 228) sur la base d'une connaissance de canal obtenue à partir de données de liaison montante pour un dispositif de transmission radio (210) d'une station de base (BS) ou sur la base d'une connaissance de canal obtenue à partir de données de liaison descendante pour un dispositif de transmission-réception radio (220) d'une station mobile (MS).

**6.** Dispositif de transmission-réception radio (210, 220) selon la revendication 1,
dans lequel l'unité d'adaptation de forme d'onde (213, 223) est configurée pour adapter la forme d'onde de transmission (217, 227) et la forme d'onde de réception (218, 228) de telle sorte que l'ensemble des canaux de liaison descendante et de liaison montante en termes de réponse impulsionnelle de canal et/ou de réponse fréquentielle de canal restent les mêmes.

**7.** Dispositif de transmission-réception radio (210) selon la revendication 6, dans lequel le dispositif de transmission-réception radio (210) est pour une station de base (BS), dans lequel l'unité d'adaptation de forme d'onde (213) est configurée pour adapter la forme d'onde de transmission (217) pour le canal de liaison descendante (DL) sur la base d'une connaissance de canal obtenue à partir du canal de liaison montante (UL).

**8.** Dispositif de transmission-réception radio (220) selon la revendication 6, dans lequel le dispositif de transmission-réception radio (220) est pour une station mobile (UE), dans lequel l'unité d'adaptation de forme d'onde (223) est configurée pour adapter la forme d'onde de transmission (227) pour le canal de liaison montante (UL) sur la base d'une connaissance de canal obtenue à partir du canal de liaison descendante (DL).

**9.** Dispositif de transmission-réception radio (210, 220) selon l'une des revendications 7 à 8,
dans lequel l'unité d'adaptation de forme d'onde (213, 223) est configurée pour adapter la forme d'onde de transmission (217, 227) soit de manière autonome, soit sur la base d'une indication pour le canal de liaison montante d'un dispositif de transmission-réception radio (220) d'une station mobile (UE) sur la base d'une indication provenant d'une station de base (BS) ou pour le canal de liaison descendante d'un dispositif de transmission-réception radio (210) de la station de base (BS) sur la base d'une indication provenant d'une station mobile (UE).

**10.** Dispositif de transmission-réception radio (210, 220) selon l'une des revendications 7 à 9,
dans lequel l'unité d'adaptation de forme d'onde (213, 223) est configurée pour adapter la forme d'onde de transmission (217, 227) et la forme d'onde de réception (218, 228) sur la base d'une sélection parmi un groupe de paires prédéfinies de formes d'onde de transmission et de réception.

**11.** Système de duplexage par répartition dans le temps (TDD) (200), comprenant :

une station de base, comprenant un premier dispositif de transmission-réception radio (210) selon l'une des revendications 1 à 11 pour transmettre des données de liaison descendante (215) et pour recevoir des données de liaison montante (216) ; et
une station mobile comprenant un second dispositif de transmission-réception radio (220) selon l'une des revendications 1 à 12 pour transmettre des données de liaison montante (225) et pour recevoir des données de liaison descendante (226).

**12.** Procédé de transmission-réception radio (1400), consistant :

à moduler (1401) des données de transmission sur une ressource temps-fréquence sur la base d'une forme d'onde de transmission, dans lequel la forme d'onde de transmission est une impulsion de transmission, une fenêtre de transmission ou un filtre de transmission ;

à démoduler (1402) des données de réception à partir de la ressource temps-fréquence sur la base d'une forme d'onde de réception, dans lequel la forme d'onde de réception est une impulsion de réception, une fenêtre de réception ou un filtre de réception,

dans lequel les données de transmission et les données de réception sont agencées sur la ressource temps-fréquence d'une manière par duplexage par répartition dans le temps (TDD) ; et

à adapter (1403) la forme d'onde de transmission et la forme d'onde de réception sur la base d'un ensemble de formes d'onde de transmission et de réception distinctes et en fonction d'une réciprocité de canal de liaison descendante-de liaison montante.

13. Programme d'ordinateur comprenant des instructions qui, lorsque le programme est exécuté par un ordinateur, contraignent l'ordinateur à mettre en œuvre le procédé selon la revendication 12.

100

pre-defined
by communication system

Tx
pulse shape

Rx
pulse shape

$g_{\text{T}}[k]$

Channel

$g_{\text{R}}[k]$

102

130

104

Fig. 1

Fig. 2

300

frequency

switching
gap (GP)

switching
gap (GP)

| DL | GP | UL | GP | DL | time |

## with increased bandwidth:

frequency

switching
gap (GP)

switching
gap (GP)

| DL | GP | UL | GP | DL |

time

Fig. 3

Fig. 4

500

510

511 512 513 514 515

| DL control Paging/sync | DL | GP (optional) | UL control NACK/SRS | GP |

| DL control Paging/sync | GP (optional) | UL | UL control NACK/SRS | GP |

521 522 520 523 524 525

Fig. 5

Fig. 6

700

701    702    703    704    705    706

| DL control Paging/sync | DL | GP | UL control NACK/SRS | GP | DL control Paging/sync |

Fig. 7

Fig. 8

Fig. 9

Fig. 10

Fig. 11

Fig. 12

Fig. 13

1400

modulating TX data onto time-frequency resource based on TX waveform

1401

demodulating RX data from the time-frequency resource based on RX waveform

1402

adapting at least one of TX or RX waveform based on a set of distinct TX and RX waveforms

1403

Fig. 14

Fig. 15

1600

Fig. 16

Fig. 17

Fig. 18

1900

Fig. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1737134 A2

### Non-patent literature cited in the description

- Discussion on New Waveform for new radio interface. **ZTE.** 3GPP DRAFT; R1-162225 DISSCUSS ON NEW WAVEFORM FOR 5G, 3RD GENERATION PARTNERSHIP PROJECT (3GPP). MOBILE COMPETENCE CENTER, 01 April 2016
- OFDM based flexible waveform for 5G. **HUAWEI et al.** 3GPP DRAFT; R1-162152 3RD GENERATION PARTNERSHIP PROJECT (3GPP). MOBILE COMPETENCE CENTER, 02 April 2016
- LTE DL Numerology to Meet the Spectral Emission Mask. **NORTEL.** 3GPP DRAFT; R4-060926 3RD GENERATION PARTNERSHIP PROJECT (3GPP). MOBILE COMPETENCE CENTER, 21 August 2006
- Evolved universal terrestrial radio access (E-UTRA); User equipment radio transmission and reception (Release 13). *3GPP TS 36.101,* January 2016
- Evolved universal terrestrial radio access (E-UTRA); base station radio transmission and reception (Release 13). *3GPP TS 36.104,* March 2016
- **NOKIA ; ALCATEL-LUCENT SHANGHAI BELL.** OFDM based Waveform for 5G new radio interface. *3GPP RAN1#84-bis,* April 2016
- **HUAWEI ; HISILICON.** OFDM based flexible waveform for 5G. *3GPP RAN1#84-bis,* April 2016
- **QUALCOMM.** Waveform candidates. *3GPP RAN1#84-bis*